(19) Europäisches Patentamt
European Patent Office
Office européen des brevets

(11) EP 2 424 903 B1

# (12) EUROPEAN PATENT SPECIFICATION

(45) Date of publication and mention of the grant of the patent:
**25.06.2014 Bulletin 2014/26**

(21) Application number: **10717953.3**

(22) Date of filing: **29.04.2010**

(51) Int Cl.:
***C08F 6/00*** (2006.01) ***C08F 8/00*** (2006.01)

(86) International application number:
**PCT/US2010/032905**

(87) International publication number:
**WO 2010/127072 (04.11.2010 Gazette 2010/44)**

## (54) PELLETIZED LOW MOLECULAR WEIGHT BROMINATED AROMATIC POLYMER COMPOSITIONS

PELLETIERTE ZUSAMMENSETZUNGEN NIEDERMOLEKULARER BROMIERTER AROMATISCHER POLYMERE

COMPOSITIONS DE POLYMÈRES AROMATIQUES BROMÉS DE FAIBLE MASSE MOLÉCULAIRE SOUS FORME DE PASTILLES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.05.2009 US 174885 P**

(43) Date of publication of application:
**07.03.2012 Bulletin 2012/10**

(73) Proprietor: **Albemarle Corporation**
**Baton Rouge, LA 70801-1765 (US)**

(72) Inventors:
- **KUMAR, Govindarajulu**
  **Baton Rouge**
  **LA 70809 (US)**
- **MACK, Arthur, G.**
  **Prairieville**
  **LA 70769 (US)**
- **LIU, Bo**
  **Zachary**
  **LA 70791 (US)**
- **LAYMAN, William, J. Jr**
  **Baton Rouge**
  **LA 70816 (US)**
- **LUTHER, Douglas, W.**
  **Walker**
  **LA 70785 (US)**

(74) Representative: **UEXKÜLL & STOLBERG**
**Patentanwälte**
**Beselerstrasse 4**
**22607 Hamburg (DE)**

(56) References cited:
**EP-A1- 0 002 514**
**EP-A2- 0 775 719**
**WO-A1-99/55770**
**WO-A2-2008/011477**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND

A new highly-effective class of low molecular weight brominated aromatic polymer compositions has recently been discovered in our laboratories. These compositions have the formula:

$$C_6H_{(5-x)}Br_xCH_2CH_2(C_6H_{(5-x)}Br_xCHCH_2\text{-})_nCH_2C_6H_{(5-x)}Br_x$$

wherein n is an average number in the range of 2.9 to 3.9, wherein each x is the same or different and is a whole number in the range of 3 to 5, the average number of all of the x's in the composition being in the range of 3.50 to 3.80 and the weight percent of bromine as determined by X-Ray Fluorescence Spectroscopy (XRF) in the polymer being in the range of 73.4 to 74.5. A detailed description of these new brominated aromatic polymer compositions and their preparation and uses is presented in commonly-owned Provisional U.S. Patent Application No. 61/119,289, filed December 2, 2008, all disclosure of which is incorporated herein by reference.

Because of the relatively low molecular weights of the polymers of the above formula (e.g., an $M_w$ in the range of 3000), it would not be expected that the above low molecular weight brominated aromatic polymer compositions would have sufficient intrinsic strength to be directly converted into pellets without co-formation of considerable amounts of powdery co-product, including powders in the form of dusts. Dust and powder formation is of course very undesirable, especially if the dusts become entrained in the air. Moreover, unless the dusts and powders are recovered for recycle, their formation would result in loss of desirable product and consequent economic loss.

The expectation that the above relatively low molecular weight polymers would not be expected to have sufficient intrinsic strength to be directly converted into pellets without co-formation of considerable amounts of powdery co-product, including powders in the form of dusts is based on actual experience in our laboratories. As pointed out in commonly-owned WO 2008/011477, anionic styrenic polymers such as anionic polystyrene, a polystyrene formed by use of an anionic polymerization inhibitor system, have "a propensity to form substantial amounts of small particles and powders when attempts are made to pelletize the product. It appears that the pellets, unless bound together by an extraneous binding agent or the like, tend during formation, handling, and/or packaging to break apart and to revert to small particles and finely-divided powder, typically referred to as "fines". Because of this characteristic, various conventional pelletizing or compacting procedures are unsuitable for producing brominated anionic styrenic polymers essentially free of fines and that during shipment and handling remain essentially free of fines. As can be readily appreciated, the existence or formation of fines in a product of this type is not only detrimental to the appearance of the pelletized product but in addition is undesired by the consumer."

In as much as the foregoing quotation applies to a type of polymer having molecular weights ($M_w$) typically in the region of 13,000, it can be seen that with a polymer having an $M_w$ in the region of 3000, the expectation would be that useful pellets could not be made without a binder and even if a binder were used, the amount of such binder in a pelletized product would necessarily be relatively high in order to keep the amount of fines and dust particles to a satisfactory minimum.

In addition, WO 99/55770 A1 discloses a brominated polystyrene flame retardant having a bromine content in the range of 55 to 70 wt% and containing alkali metal base, the amount of which is less than 1 wt%, such that if the flame retardant is dissolved in bromochloromethane and the resultant solution is extracted with water, the resultant water extract exhibits a pH of at least 9.0. Said flame retardant is in particulate form obtainable by precipitation from a solution of brominated polystyrene.

Further, EP 0 775 719 A2 discloses a process for preparing a vulcanizable elastomeric composition by combining multiple different granular polymers wherein each elastomer has particles in size of 5 mm or smaller into a granular purblind, and masticating the purblind with at least one vulcanizing agent to produce a vulcanizable eleastomeric compound.

In addition, EP 0 002 514 A1 discloses a flame retardant concentrate consisting of a homogeneous blend of 10 to 80 wt% of a brominated oligomeric styrene, 5 to 50 wt% of a metal oxide, and 0 to 85% of an inorganic filler. This flame retardant can be added to thermoplastic polymers in an amount of 10 to 50 wt% in order to provide flame retardancy to the thermoplastic polymer. This concentrate is disclosed to be useful for flame retarding thermoplastic polymers. The flame retardant concentrates can be added to the thermoplastic polymers in amounts of 10 to 50 wt%.

Indeed, it would be of considerable advantage if a way could be found of converting powdery polymers of the type referred to above into pellets which, even if susceptible to breakup during handling or use, would form smaller aggregates with little, if any, co-formation of air-entrainable dusts.

## BRIEF NON-LIMITING SUMMARY OF THE INVENTION

Contrary to such expectations, it has been found, surprisingly, that polymers of formula (I) below can be converted into pellets by process technology provided by this invention. More particularly, it has been found that by forming a melt blend of a polymer of formula (I) below, together with a modest amount of at least one thermoplastic polymer of at least one monoolefinic monomer having in the range of 2 to 12 carbon atoms per molecule, and converting the melt blend into pellets as described herein, it is possible to achieve the formation of pellets which produce during production, handling, and use, almost no "fines" or air-entrainable dusts. As will be seen from experimental data presented hereinafter, it has been found possible pursuant to this invention to form pellets which when subjected to a Tumbling Attrition Test, form no more than 2 wt% of fines. Indeed, with suitable proportions of components used in the practice of this invention, pellets were formed having the ability of forming no more than 1 wt% of fines in the Tumbling Attrition Test.

Thus, the invention provides a process for pelletizing a brominated aromatic polymer composition of the formula:

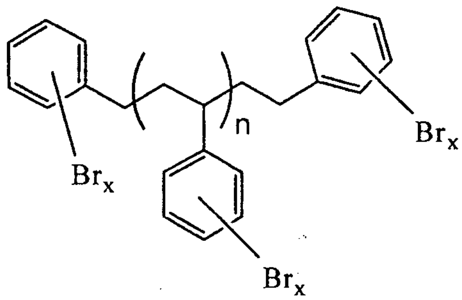

wherein n is an average number in the range of 2.9 to 3.9, wherein each x is the same or different and is a whole number in the range of 3 to 5, the average number of all of the x's in the composition being in the range of 3.50 to 3.80 and the weight percent of bromine as determined by X-Ray Fluorescence Spectroscopy in the polymer being in the range of 73.4 to 74.5, which process comprises forming a flowing melt blend from components comprised of

(A) brominated aromatic polymer composition of the above formula and

(B) at least one thermoplastic polymer of at least one monoolefinic monomer having in the range of 2 to 12 carbon atoms per molecule

in proportions in which the Component (A):Component (B) weight ratio is in the range of 80:20 to 99.5:0.5; and converting said flowing melt blend into solidified pellets,

wherein during the process of pelletization of the blend of said components comprised of (A) and (B), formation of particles in the dust size range of 20 to 840 μm is no more than 5 wt%.

Further, the invention provides a pelletized flame retardant composition formed by said process.

Provided by this invention are non-dusting pellets which are environmentally friendly, recyclable, and melt blendable. In addition, the pellets of this invention are deemed to have better overall mechanical properties, better thermal stability, better color stability, and better flame retardant efficiency. The pellets have the following typical properties:

| Property | Values |
|---|---|
| Appearance/Form | Off-white pellets |
| Specific gravity | 2.30 |
| Bromine Content | ≥70% |
| Glass Transition Temperature (by DSC) | 122°C |
| TGA, (10°C/min under $N_2$) | |
| 1% weight loss | 330°C |
| 5% weight loss | 354°C |
| 10% weight loss | 366°C |

The above and other features, characteristics, and advantages of this invention will become still further apparent from the ensuing description, accompanying drawings, and appended claims.

## BRIEF DESCRIPTION OF THE DRAWINGS

FIG. 1 is a schematic block flow diagram of a system for producing pellets in which separate feeds of solutions or slurries of Components (A) and (B) are used as feeds to a devol extruder.
FIG. 2 is a schematic block flow diagram of a system for producing pellets in which a solution or slurry of a combination of Components (A) and (B) is used as a feed to a devol extruder.
FIG. 3 is a schematic block flow diagram of a system for producing pellets in which both a devol extruder and a compounding extruder are used.
FIG. 4 is a schematic block flow diagram of a system for producing pellets in which a compounding extruder is used.
FIGS. 5A through 5D illustrate the manner of conducting the Tumbling Attrition Test for determining fines, if any, formed from pellets of this invention.

## FURTHER DETAILED DESCRIPTION OF THE INVENTION

This invention provides new, effective ways of pelletizing the novel polymers of formula (I) above. During pelletization, minimal formation, if any, of finely divided particulate material occurs. Also, during pelletization minimal or no appreciable formation of air-entrainable dusts takes place. Additionally, the resultant pellets, if susceptible to breakup during handling or use, may form during any such breakup smaller granules accompanied by little, if any, co-formation of air-entrainable dusts. Thus, this invention provides, among other things, a process for pelletizing a brominated aromatic polymer composition of formula (I) below, which process comprises forming a flowing melt blend from components comprised of (A) brominated aromatic polymer composition of formula (I) depicted and as described below (hereinafter often referred to as "BAPC" or "Component (A)") and (B) at least one thermoplastic polymer of at least one monoolefinic monomer having in the range of 2 to 12 carbon atoms per molecule (hereinafter sometimes referred to as "Component B") in proportions in which the Component (A):Component (B) weight ratio is in the range of 80:20 to 99.5:0.5; and converting said flowing melt blend into solidified pellets, the process being characterized in that during the process of pelletization of the blend of said components comprised of (A) and (B), formation of finely divided particles is suppressed and formation of air-entrainable dust is either eliminated or reduced to acceptably small levels, and the pellets are characterized in that, if susceptible to breakup during handling or use, smaller granules are formed accompanied by little, if any, co-formation of air-entrainable dusts. In other words, during pellet formation, pellet handling, and pellet usage, the pellets are not accompanied by, or result in formation of, unacceptable quantities of air-entrainable dusts, even though some smaller granules may be formed.

Desirably, the Component (A):Component (B) weight ratio is in the range of 88:12 to 98:2. When Component (B) is a general purpose crystal styrenic polymer such as general purpose crystal polystyrene, desirably the Component (A):Component (B) weight ratio is in the range of about 97:3 to about 95:5.

When utilized in forming the flowing melt blend, Component (A) can be in various forms such as small grains or granules, but typically it is in the form of a powder.

Among desirable methods for producing pellets pursuant to this invention, is a process as described above in which the conversion of Components (A) and (B) into a flowing melt blend is conducted at an elevated temperature in an operating continuous extrusion device such as a twin screw extruder, and wherein the extrudate from the extruder is pelletized before or after the extrudate solidifies or is solidified. Use of pelletizing equipment as described in U.S. Patent Application Publication 2007/0185280, published August 9, 2007, has been found to be an effective way of producing pellets of this invention having the low dust properties.

Another desirable process for producing pellets pursuant to this invention is a process as described above in which a solution or slurry of extrudable viscosity formed from Components (A) and (B), and a solvent is converted in a devolatilization extruder operating at an elevated temperature into a flowing melt blend, and wherein the extrudate from the devolatilization extruder is pelletized before or after the extrudate solidifies or is solidified. In conducting such a process, it is particularly desirable not only to effect the conversion of Components (A) and (B) into a flowing melt blend by use of a devolatilization extruder, but additionally to recover the solvent that is vaporized from the solution. Whether or not solvent recovery is utilized, the weight ratio of Component (A):Component (B) in the solution and in the melt blend is within the range of 80:20 to 99.5:0.5, and the extrudate from the devolatilization extruder is pelletized before or after the extrudate solidifies or is solidified. For convenience, the term devolatilization extruder is hereinafter often referred to more simply as "devol extruder". As above, desirably, the Component (A):Component (B) weight ratio is in the range of 88:12 to 98:2. When Component (B) is a general purpose crystal styrenic polymer such as general purpose crystal

polystyrene, desirably the Component (A):Component (B) weight ratio is in the range of 97:3 to 95:5. Use of pelletizing equipment as described in International Publication Number WO 2008/011477, published January 24, 2008, has been found to be an effective way of producing pellets of this invention having the low dust properties.

In the pelletization methods of this invention, a "flowing melt blend" or a term of similar meaning such as "polymer flow" is often referred to. As used herein, including the claims, such terms refer to the fact that the blend of comprised of Components (A) and (B) and any other optional ingredients in the operating extrusion devices such as single or twin screw extruders, cross head extruders, devol extruders, etc., becomes a melted mass and/or a sufficiently softened mass that will thenceforth proceed (*i.e.,* flow) through the remainder of the device (including any extension that may be added thereto) and a die disposed at the discharge end of the machine under the thrust provided within the machine by the screw(s) thereof. It matters not whether, strictly speaking, a true melt of the blend comprised of Components (A) and (B) and any other optional ingredients has been formed or whether the BAPC has merely been softened to such an extent that it will be caused to flow as just indicated.

Also provided by this invention is a pelletized flame retardant composition in which the pellets comprise a blend of components comprised of

(A) BAPC of the formula:

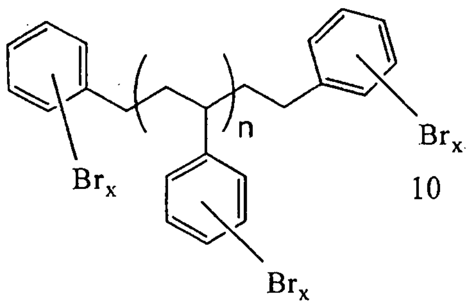

10 (I)

wherein n is an average number in the range of 2.9 to 3.9 (which when rounded off to whole numbers, becomes an average number in the range of 3 to 4), wherein each x is the same or different and is a whole number in the range of 3 to 5, the average number of all of the x's in the composition being in the range of 3.50 to 3.80 and the weight percent of bromine as determined by X-Ray Fluorescence Spectroscopy (XRF) in the polymer being in the range of 73.4 to 74.5; and

(B) at least one thermoplastic polymer of at least one monoolefinic monomer having in the range of 2 to 12 carbon atoms per molecule,

the proportions of Components (A) and (B) utilized in forming the blend being in an (A):(B) weight ratio in the range of 80:20 to 99.5:0.5, with this ratio desirably being in the range of 88:12 to 98:2. When Component (B) is a general purpose crystal styrenic polymer such as general purpose crystal polystyrene, desirably the Component (A):Component (B) weight ratio is in the range of 97:3 to 95:5.

It will be appreciated that formula (I) above is the same as the formula presented at the outset of this disclosure, except that formula (I) above is in an expanded form which illustrates the bonding among the groups in the molecule. It is to be understood that neither formula (I) above nor formula (II) hereinafter is intended to represent the actual spatial configuration of the molecules. Rather, the depiction of these formulas is merely for the purpose of facilitating an understanding of the composition of the molecules.

<u>*BAPC's and Their Precursors*</u>

The BAPC's constitute Component (A) of the blends which are pelletized pursuant to this invention.

To date, the only known method for producing these novel BAPC's is to brominate an aromatic polymer composition, *i.e.,* a distribution of low molecular weight styrene polymers of the formula:

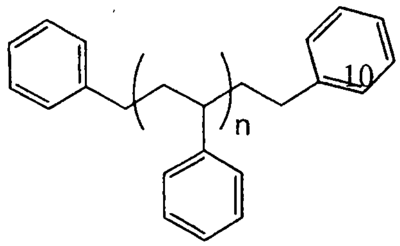

(II)

wherein each $C_6H_5$ is a phenyl group, n is an average number in the range of 2.9 to 3.9 with the proviso that 1,3-diphenylpropane, a compound of formula (II) in which n is 0, optionally is present in this distribution in an amount of not more than about 1 GPC area %, and with the further proviso that this distribution optionally further contains toluene in an amount of not more than 0.1 GPC area %, and wherein this distribution is further characterized by having an $M_w$ in the range of 650 to 750, an $M_n$ in the range of 500 to 600, an $M_z$ in the range of 830 to 1120, and a polydispersity in the range of 1.2 to 1.35.

It will be noted from formula (II) that the aromatic polymer compositions possess a characteristic phenethyl end group in their molecular structure. For convenience, aromatic polymer compositions of formula (II) depicted and described above are often referred to hereinafter in the singular as "APC" and in the plural as "APC's".

Presented below are further details concerning the preparation of the APC's of formula (II) and thereafter bromination of an APC to form a BAPC of formula (I). The APC's of formula (II) thus constitute the precursors for the BAPC's of formula (I).

<u>*APC's*</u>

To prepare the APC's of formula (II) above, styrene is fed into an agitated reaction mixture formed from components comprising toluene, alkyllithium, and *N,N,N',N'*-tetramethylethylenediamine (TMEDA), at rates of (i) moles of styrene/moles of toluene/hour in the range of 0.3 to 1.5 and (ii) moles of styrene/moles of alkyllithium/hour in the range of 40 to 110. The molar ratio of styrene:toluene is in the range of 0.75 to 4, the molar ratio of styrene:alkyllithium is in the range of 150 to 350, and the molar ratio of TMEDA:alkyllithium is in the range of 2.2 to 8. The temperature of the reaction mixture is maintained in the range of 70°C to 90°C, and desirably in the range of 78°C to 81°C; the agitation being at least sufficient to maintain a substantially homogeneous concentration profile in the reaction mixture. Upon completion of the reaction, as indicated, for example, by rapid reduction in the process temperature at constant heat flux, the reaction mixture is quenched, typically at a temperature of below 80°C. The quenching is effected using a protic solvent which, (i) if water is the quenching solvent, at least one phase cut is made to separate the organic and aqueous phases, and (ii) if a quenching solvent other than water is used, wash water is added to extract the quenching solvent and form an organic phase and an aqueous phase which are then separated by a phase cut. The TMEDA and unreacted toluene are separated and recovered from the reaction mixture, typically by distillation or a stripping operation, whereby the last traces of water are also removed azeotropically from the reaction mixture. Preferably, the TMEDA-toluene mixture is recovered and recycled to the reaction after drying by conventional means, which include passing through molecular sieves or by refluxing under a sparge of dry nitrogen, or any other method which preferably does not remove the TMEDA from the toluene. If the method happens to remove the TMEDA, it is desirable from a process economics standpoint to recover and recycle the TMEDA as well as the toluene. In the quenching operation and washings thereafter, use of deoxygenated water is especially desirable because it suppresses formation of color bodies in the distribution of styrene polymers. Formation of such color bodies is very undesirable in as much as the amount of such color bodies can continuously increase as the commercial production unit reaches steady-state production. A commercial plant facility can be operated either on a batch, semi-batch, or continuous mode using balanced feeds as described above.

In conducting the above processing it is desirable to ensure that the reagents in the reaction mixture are uniformly dispersed. Thus, the combination of significant agitation and dispersive mixing of the reagents in the reaction mixture is utilized. The agitation and mixing used should be at least sufficient to maintain a substantially homogeneous concentration profile in the reaction mixture. That is to say, that concentration gradients of all reagents in the total volume of the reaction mixture should be at a minimum such that there is no one discrete reaction zone *(i.e.,* locally high concentrations of any such reagent are at a minimum). As a consequence of this, the complementary reaction kinetics of chain transfer and chain propagation occur uniformly throughout the entire volume of the reaction mixture, thereby providing the uniform molecular weight distributions achieved in the practice of this process technology. In doing so, competing undesirable side reactions which would lead to catalyst inefficiencies and formation of impurities are essentially eliminated.

At this stage of the overall process of forming APC's, the residual reaction product from the workup conducted up to this stage is a crude reaction product requiring further treatment.

The crude reaction mixture comprising a styrene polymer distribution remaining after the separation operation referred to above is then subjected to a selective purification operation which ensures that the content of 1,3-diphenylpropane, if any, is not more than 1 GPC area % and that the content of free toluene, if any, in the styrene polymer distribution is less than 0.1 GPC area %. In addition, this operation should yield a product having an $M_w$ in the range of 650 to 750, an $M_n$ in the range of 500 to 600, an $M_z$ in the range of 830 to 1120, and a polydispersity in the range of 1.2 to 1.35. Because of the low-molecular weights and the viscous and thermal characteristics of the crude reaction mixture, this selective purification is typically conducted using wiped film evaporation. Use of one or two passes through a suitable wiped film evaporator is usually sufficient to achieve these desired specifications for the aromatic polymer compositions used as the substrates in the bromination reaction without degradation of the APC which remains as the desired product of this overall operation.

*Bromination of APC's to Form BAPC's*

Any known method for bromination of aromatic hydrocarbons may be employed for preparing the BAPC's which serve as Component (A) of the blends that are pelletized, pursuant to this invention. In general, aromatic brominations are conducted in the absence of light and preferably use elemental bromine as the brominating agent. The bromination is carried out under anhydrous conditions, using a suitable Lewis acid catalyst such as an aluminum halide or ferric halide catalyst. To minimize bromination on aliphatic carbon atoms, the reaction is preferably conducted at temperatures below 25°C. A bromination solvent is typically used in the process.

Successfully used in the practice of this invention was a bromination process which involved brominating an APC with bromine as the brominating agent in the presence of a catalytic amount of an aluminum halide bromination catalyst and a solvent and wherein at least substantially all of the bromination occurs at a temperature within the range of from -10°C to 0°C to form a composition having a bromine content as determined by XRF in the range of 73.4 to 74.5.

Desirably, the initial form of the aluminum halide catalyst used in the above bromination process is as $AlCl_3$ or $AlBr_3$. However, a mixture of these can be used if desired. The $AlCl_3$ is desirably slurried in a suitable diluent. Alternatively, $AlCl_3$ can be reacted by means of chloride-bromide exchange (trans-halogenation) to produce a mixed or partially mixed chlorobromo aluminum trihalide with improved solubility in the liquid diluent. When $AlBr_3$ is used, it is desirable to predissolve it in bromine. The bromination processes can be conducted as a batch, semi-batch or as a continuous process.

Generally speaking, preferred bromination processes used for forming the BAPC's can be additionally characterized by having the APC fed to a reactor as a solute in proximity to and contemporaneously with joint or separate feed(s) to the reactor of the brominating agent and the aluminum halide catalyst. These feeds desirably occur subsurface to the liquid contents of the reactor (usually a liquid solvent heel at feed initiation and the crude reaction mass after feeding has been initiated) and such feeds form, with the initial reactor contents, a crude reaction mass at least comprising a BAPC, aluminum halide catalyst, and solvent. The crude reaction mass can also contain unreacted brominating agent. Another class of impurity that will likely be present is N-bromoamines, which are suspected to give rise to undesirable color bodies and thermally labile bromine. These N-bromoamines would form from amine components or impurities suspected to be present in aromatic polymer compositions as derivatives from the chain transfer polymerization promoter, TMEDA.

The solvent chosen for the feed of the APC is preferably the same as the solvent that is pre-charged to the reactor before feeding begins.

The solvent used with the APC's and reactor pre-charges can be selected from any of the following exemplary solvents; dichloromethane, dibromomethane, bromochloromethane, bromotrichloromethane, chloroform, 1,2-dibromoethane, 1,1-dibromoethane, 1-bromo-2-chloroethane, 1,2-dichloroethane, 1,1,2-tribromoethane, 1,1,2,2-tetrabromoethane, 1,2-dibromopropane, 1-bromo-3-chloropropane, 1-bromobutane, 2-bromobutane, 2-bromo-2-methylpropane, 1-bromopentane, 1,5-dibromopentane, 1-bromo-2-methylbutane, 1-bromohexane, 1-bromoheptane, bromocyclohexane, and liquid isomers, homologs, or analogs thereof and mixtures of any two or more of the foregoing. Preferred solvents are dichloromethane, dibromomethane, and 1,2-dichloroethane. Bromochloromethane is a particularly preferred solvent.

Whatever solvent is chosen, it is important to ensure that it is relatively free of water. Water in the reaction system during bromination will affect catalytic activity of the aluminum halide catalyst as is well recognized in the art. Generally, it is best that the solvent contain less than 50 ppm (wt/wt) water. In regard to water, all reactants should be dry. The brominating agent, e.g. bromine, should not contain more than 30 ppm water. The aromatic polymer compositions should also be sufficiently dry so as to not introduce deleterious amounts of water into the bromination.

The amount of solvent in the feed of the aromatic polymer compositions is that amount which at least enables the formation of a free-flowing, low-viscosity solution. In cases where the APC is in the liquid state, consideration for using a solvent-free feed of the APC can be given. However, it has been found that the use of a solvent is preferred as it helps dilute the feed of the APC so that efficient bromination can occur in the reaction mass. Generally, when the solvent is bromochloromethane, from 60 to 80 wt% (preferably from 65 to 75 wt%) of the feed of the APC's will be solvent.

It is advantageous to remove polar species from such APC solutions prior to bromination. This is accomplished by treating the APC-bromination solvent solution with a solid absorbent that does not introduce into the solution, or catalyze the formation in the solution, of unacceptable amounts of impurities. Such treatment results in enhanced thermal HBr stability at temperatures as high as 320°C. Acidic aluminum oxide is one example of such an absorbent. Other suitable absorbents that do not introduce or catalyze formation of an unacceptable amount of impurities include, for example, the acidic forms of Amberlyst® or Amberlyte® resins (Rohm & Haas Company), and the acidic forms of Dowex® resins (The Dow Chemical Company). Also suitable are high surface silica gel, neutral and basic forms of aluminum oxide, and certain acidic zeolites.

The pre-charge of solvent to the reactor prior to the reactant and catalysts feeds is that amount which will provide a sufficient mass to provide an adequate heat sink to disperse the heat of the bromination reaction combined with the heat of solution of the by-product HBr so that a "heat kick" or temperature spike is minimized in the proximity of the above mentioned feeds. To this end, it is also preferred that -the crude reactor contents/crude reaction mass be stirred to promote thermal and mass uniformity therein. Use of a heel from a previous run already saturated with HBr reduces the initial demand on the cooling system of the reactor and for that reason is preferred in some commercial configurations.

The aluminum halide solvent can be fed to the reactor separate from the brominating agent feed. However, such a separated feeding scheme is not preferred. Process simplicity dictates that the brominating agent be bromine and that the aluminum halide solvent and the bromine be fed as a single feed. $AlBr_3$ readily dissolves in bromine. $AlCl_3$ can be dispersed or slurried in bromine. The amount of $AlBr_3$ fed, whether separately or in combination with the bromine feed, is a catalytic amount sufficient to provide from 0.3 to 1 mole % $AlBr_3$ per mole of bromine fed as calculated using the equation:

$$\text{Mole \% AlBr}_3 = (\text{weight of AlBr}_3/266.7 \div \text{weight of Bromine}/159.81) \times 100$$

The amount of bromine fed is that amount required to achieve the desired bromination level sought assuming some small loss of bromine overhead with by-product HBr. Thus, for example, when desiring to obtain a bromine content of 73.4 to 74.5 wt%, 3.5 to 3.8 moles of bromine are fed per mole of phenyl group present. The moles of phenyl group present for the styrene polymer (III)

(III) 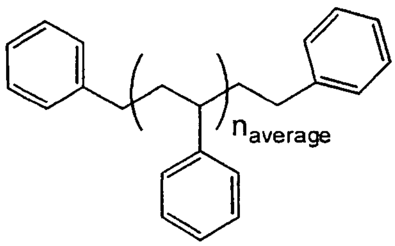

is given by the following:

$$\text{Mole phenyl/mole styrene polymer} = 2 + n_{average} = 2 + [(M_n - 196.29) / 104.15].$$

Alternatively and more conveniently one can simply charge bromine based on the equations below:

a) wt Br = wt% Br · wt $APC_{brominated}$
b) wt $APC_{brominated}$ ≈ wt $APC_{unbrominated}$ / (1 - wt% Br)

Note: In b), the approximation is the result of ignoring the small amount of mass not accounted for the protons substituted by bromine.

Thus

c) wt Br ≈ wt% Br · [wt $APC_{unbrominated}$ /(1 - wt% Br)]
and
d) Moles bromine = 2 · wt Br / 159.81

e) Moles bromine ≈ 2 · wt% Br * [wt $APC_{unbrominated}$ /(1 - wt% Br)] /159.81

It is preferred to feed, as close as is possible, just the amount of bromine needed to obtain the wt% bromine desired. If, excess bromine is fed, then at least some of that excess will be in the crude reaction mass and should be removed in down-stream finishing steps.

Whatever the reason for the presence of excess bromine in the crude reaction mass, conventional techniques recognized in the art to remove such excess bromine can be used, e.g., using a reducing agent such as sodium sulfite, to convert the bromine to water soluble bromide salts. However, it has been observed that the use such reducing agents tends to encourage the formation of an emulsion and/or rag during some of the down-stream finishing steps. Such, emulsion or rag layer causes separation difficulties and process inefficiencies.

The APC, brominating agent, and aluminum halide feeds such as $AlBr_3$ should be made beneath the surface of the reactor contents/reaction mass and in close proximity to each other. The bromination of the APC's should occur quickly. The rates of reaction for these brominations are very fast due to reaction kinetics. Thus, the rate-determining factor is the rate of mass transfer. Hence, the use of proximate feeds is designed so that the reactants and catalyst are close, one to the other. Another factor that can ensure fast bromination is to use a feed of $AlBr_3$ in solution with bromine. It is believed that the bromine preconditions the $AlBr_3$ to the active catalyst state so that the catalyst is active when first fed. One technique to ensure close proximity of the feeds is to provide that the feed tubes into the reactor contents/reaction mass be held together so that they discharge in adjacent parallel or in direct, impinging directions.

Having the feeds discharge beneath the reactor content/crude reaction mass liquid levels is beneficial as it ensures that there is heat dissipation away from the feeding area. Having a "hot spot" at the feeding area is to be avoided to the extent commercially possible. Again, stirring of the reactor contents/crude reaction mass also aids in heat dispersion.

The amount of solvent pre-charge to the reactor should be that amount necessary to accomplish the heat dissipation function without burdening the process with higher than needed material handling expenses.

The feed rate of the individual feeds should be as high as is possible considering the reactor size and design, the heat that is to be handled and the cooling available to assist in heat management, the feeding apparatus available and the ability to safely handle HBr by-product gas. The higher the possible feed rates, the more efficient the process.

During the co-feed, the reactor contents/crude reaction mass should be kept at a temperature within the range of from -20°C to 5°C and preferably within the range of from -20°C to 5°C, and more usually in the range of -10°C to 0°C until substantially all the bromination has occurred. The feeds to the reactor are conveniently fed at about ambient temperature. To obtain the reactor contents/crude reaction mass temperatures mentioned above, the reactor is provided with adequate cooling. The temperature should be measured as close to the feed area as is practical.

The pressure in the reactor during the bromination is not critical, superatmospheric pressures being the norm. However, very high pressures are not preferred in the context of equipment requirements and safety issues. Autogenous pressures are permissible.

Subsequent to the reactant and catalyst feeds, it is permissible to allow the reaction mass to experience a ride time to ensure that bromination has ceased. It is permissible, when brominating at 74 wt% bromine, to allow the temperature to warm to 7°C to help facilitate consumption and react out as much of the fed bromine as is practical. This is particularly desirable where the practitioner decides to forgo the use of a bromine reducing agent during the initial aqueous quench so as to avoid any emulsion and rag layer difficulties.

After the feeds are completed and the ride time, if any, has passed, the crude reaction mass is removed from the reactor and quenched in water. As mentioned previously, if the crude reaction mass or, for that matter, any organic phase that is treated down-stream of the bromination, contains unreacted bromine, such bromine content can be lowered or eliminated by the use of a reducing agent to convert the bromine to water soluble bromide. But again, the use of such reducing agents, particularly the sulfites can cause emulsion formation, and can lead to a product with a higher $\Delta E$ value in the Hunter Solution Color Value Test. Therefore, it is recommended to not use bisulfite or sulfite, or any other sulfur-based bromine reducing agent.

The quench is conveniently performed at ambient temperature and generally speaking no heating other than the heat of solution of residual HBr is needed to effect a phase separation. Since bromine and other active brominating species can be present it is preferred to minimize heating of the mixture and to limit exposure to visible light. This assists, to some extent, in helping to ensure a low thermally labile bromine content.

The water quench does not have a ride time as the deactivation of the $AlBr_3$ and the reduction of bromine is nearly instantaneous as the crude reaction mass is fed to the quench water or quench water reducing agent solution. Once the quench is complete, two defined phases are formed, an aqueous phase and an organic phase. The organic phase contains solvent and the BAPC, and will require further treatment.

After the water quench and phase separation and any additional bromine removal steps (water extraction or distillation) are complete, it is desirable to wash the organic phase with a basic sodium borohydride solution. The borohydride and its borane byproducts act to convert available active bromine species, including available unreacted brominating agent, e.g., bromine (if any should still be present), and any available derivatives formed from the unreacted

brominating agent (e.g., hypobromites, and/or hypobromous acid) and also any available N-bromoamines, so that the bromine and active bromine species are reduced to bromide, and in the case of the N-bromides, this material is reduced to sodium bromide and free amine. Thus, the use of sodium borohydride has a primary function, *i.e.,* to reduce the amount of N-bromoamines present, and a secondary function, *i.e.*, the reduction of any amount of bromine present. Thus, quantitatively, the amount of sodium borohydride used is that amount necessary to handle both functions. As used in this paragraph, the term "available", as used in connection with active bromine species, unreacted brominating agent, derivatives formed from the unreacted brominating agent, and N-bromoamines, denotes that the identified materials are not occluded within solids to such an extent that they cannot be removed simply by contact with the sodium borohydride solution.

As the caustic aqueous sodium borohydride solution is used to treat the organic phase, an aqueous phase is formed. The pH of the sodium borohydride solution is such that the formed aqueous phase has a pH between 10 and 14 throughout the period that the formed aqueous phase is in contact with the organic phase.

Usually, but not necessarily, the sodium borohydride content of the treating solution is within the range of from 0.05 to 1.0 wt% sodium borohydride, based on the total weight of the treating solution.

An important feature of the caustic sodium borohydride step is that a temperature above 45°C and preferably within the range of from 54°C to 62°C at one atmosphere is maintained during the treatment period. Experimentation has shown that room temperature does not obtain the high attenuation of N-bromoamine derived color bodies and thermally labile bromine that higher temperatures obtain.

The treatment temperature is maintained for at least that amount of time needed to obtain the benefits of the treatment, generally at least 30 minutes has deemed to be more than sufficient. The practitioner can choose a lesser amount or a greater amount of time as needed. Generally, experimentation has shown that the organic phase and aqueous mixture (during treatment, mixing is provided) will noticeably begin to thin at 45°C to 50°C. It is theorized that the N-bromides and any N-sulfides and/or N-oxides species present are quaternary and hence charged species or at least highly polar species. Such species are implicated in the thickening of the intimately mixed organic and basic aqueous phase. This is observed in an increased draw on the agitator drive used in the mixing. At a temperature above 45°C and closer to 54°C such thickening is eliminated and the draw on the drive is reduced. At temperatures below 45°C, thickening occurs and at times incomplete phase separation is observed. Once higher temperatures are achieved, the thickening phenomenon is eliminated, and phase separation is nearly instantaneous, especially when temperatures in excess of 54°C are used.

The use of the above described aqueous caustic sodium borohydride treatment or wash can be used at any time after the water quench step and phase separation and on any recovered organic phase in the down stream, finishing sequence.

It is preferred to avoid substantial heating of the organic phase prior to the sodium borohydride treatment. Hence temperatures below 35°C are preferred prior to the borohydride treatment.

After the final washing, the organic phase is separated from the aqueous phase and fed to hot water, say from 90°C to 100°C, to flash off the solvent present and to yield solids in the aqueous phase. Temperature maintenance can be achieved by keeping the water at reflux temperature. This flashing off technique is well known in the art of producing brominated polystyrenics.

Once the solvent has been flashed off, the solids are separated from the water by conventional means, e.g., filtration and the like. The separated solids are then dried by conventional drying techniques, again keeping in mind the $T_g$ of the solids. The dried solids are the finished BAPC's suitable for use in the pelletization process of this invention.

Another method that may be useful when dealing with low $T_g$ polymers, is to send the organic phase (after azeotropic drying to prevent corrosion issues) to a wiped film evaporator, a falling film evaporator, a continuous strip kettle or a devol extruder where solvent can be rapidly removed and the resulting viscous melt can be easily manipulated and then pelletized pursuant to this invention.

Whether devolatilization is conducted by means of precipitation or by means of wiped film evaporator, a falling film evaporator, a continuous strip kettle or a devol extruder, it is preferred to filter the azeotropically dried solution through activated acidic aluminum oxide. It has been found that 1-5 parts by weight of aluminum oxide per 100 parts by weight of dissolved (contained) BAPC is sufficient to remove impurities that contribute to reduced thermal color stability.

The foregoing bromination and work-up procedures enable the preparation of the BAPC's which are utilized as component (A) in the pelletization in the practice of this invention. It will be recalled that such BAPC's are described hereinabove with reference to formula (I).

*Component (B) - Thermoplastic Polymers of at Least One Monoolefinic Monomer*

The thermoplastic polymers referred to below constitute Component (B) of the blends which are pelletized pursuant to this invention.

In general, these thermoplastic polymers are thermoplastic polymers of at least one monoolefinic monomer

having in the range of 2 to 12 carbon atoms per molecule. The monoolefinic monomer can be entirely aliphatic or partially aromatic and partially aliphatic. Additionally, these thermoplastic polymers can be homopolymers or copolymers. Thus, these thermoplastic polymers include (a) one or more crystal styrenic polymers, (b) one or more impact modified styrenic polymers, or (c) both of (a) and (b), (d) one or more aliphatic olefinic hydrocarbon homopolymers or copolymers, (e) one or more copolymers of at least one olefinic hydrocarbon and an olefinic monomer containing a functional group, or (f) both of (d) and (e). Non-limiting examples of polymers of (a) include crystal polystyrene, crystal styrene/$\alpha$-methyl styrene copolymer, crystal styrene/vinylnaphthalene copolymer, crystal styrene/p-tert-butyl styrene copolymer, and analogous compounds. Non-limiting examples of polymers of (b) include various rubber-modified styrenic polymers such as low impact polystyrene, medium impact polystyrene, and high impact polystyrene, as well as rubber-modified styrenic co-polymers of styrene and at least one other styrenic monomer. Non-limiting examples of polymers of (d) include polyethylene, polypropylene, poly(4-methyl-1-pentene), ethylene/propylene copolymer, ethylene/octene copolymer, ethylene/propylene/hexene copolymer, and analogous olefin co-polymers having up to 12 carbon atoms per molecule such as, for example, a copolymer of ethylene and an aliphatic $\alpha$-olefin hydrocarbon having 3 to 10 carbon atoms per molecule. Non-limiting examples of polymers of (e) include ethylene/vinylacetate copolymer, ethylene/butylacrylate copolymer, methacrylate-butadiene-styrene copolymer, methylacrylate/alkylacrylate copolymers, methylmethacrylate/alkyl-methacrylate copolymers, and like copolymers.

Another group of thermoplastic polymers of at least one monoolefinic monomer having in the range of 2 to 12 per molecule is composed of vinylcycloalkanes and copolymers thereof with aliphatic olefinic hydrocarbon homopolymers or copolymers and/or styrenic homopolymers or copolymers. A few non-limiting examples of this group of thermoplastic polymers that can serve as Component (B) include poly(vinylcyclopentane), poly(vinylcyclohexane), poly(vinylcycloheptane), poly(vinylcyclooctane), a copolymer of vinylcyclopentane and ethylene or propylene, or both, a copolymer of vinylcyclohexane and styrene or p-methylstyrene, or both, a copolymer of vinylcyclohexane, ethylene and styrene, and analogous homopolymers and copolymers.

*Other Components of the Pellets of this Invention*

Various other components can be included in the blends which are pelletized pursuant to this invention. Non-limiting examples of suitable additional components for the blends which are pelletized pursuant to this invention include: antioxidants; UV stabilizers; acid neutralizers; heat or thermal stabilizers; antistatic agents; chelating agents; lubricants and mold release agents; plasticizers; impact modifiers; dyes, colorants, or pigments; flame retardant synergists; fillers and/or reinforcing agents; and the like. These materials are typically used in known amounts, and may include amounts as recommended by their manufacturers or suppliers.

*Producing Pellets of this Invention by Forming a Flowing Melt Blend from a Feed of Solids*

A variety of pelletizing equipment can be employed in forming the pellets of this invention. For example, the molten blends comprising at least Components (A) and (B) in the proportions given above can be pelletized by producing a flowing melt blend in a suitable high-shear, elevated temperature, continuous melt mixing device such as a single screw extruder, a twin screw extruder, a gear extruder, a disc extruder, or a roll mill extruder and forcing the flowing melt blend through the orifice(s) of a die which produces at least one strand, and preferably a plurality of strands, of the melt blend, followed by conversion of the strand(s) into pellets by use of a chopper, an air knife system, or other form of pelletizer, , such as Reduction Engineering's Conair strand pelletizer 300 series, Killion strand pelletizer, Brabender strand pelletizer, Rieter/Automatik pelletizer, and Ikegai or Cumberland strand pelletizers.

While other equipment can be utilized, one efficient and effective way of forming the pellets pursuant to this invention comprises forming the flowing melt blend at an elevated temperature in a twin-screw extruder being operated under relatively mild operating conditions. The extrudate from the extruder is pelletized before or after the extrudate solidifies by itself or is solidified by means of some appropriate method of cooling the melt, such as by passage into a cooling liquid such as water, contact with a chilled surface such as a chilled metallic conveyor belt, or use of a cooling gas such as refrigerated air or nitrogen.

One of the efficacious ways of effecting the conversion of the extrudates comprised of a blend of at least Components (A) and (B) into pellet form is a method which comprises:

- forming at least one strand of molten BAPC, e.g., by passing the flowing melt in the extruder through a die disposed at the outlet end of the extruder, which die preferably has multiple orifices so that multiple strands of molten BAPC are formed;
- submitting such strand(s) to cooling and downwardly directed forced air flow on a porous conveyor belt whereby such strand(s) break into pellets; and
- causing such pellets to drop into a classifier that removes fines from the pellets. As noted above, the pellets of this

invention, if properly made, form only small amounts of fines during the drop into the classifier.

*Producing Pellets of this Invention by Forming a Flowing Melt Blend from a Feed of a Solution or Slurry*

Another efficacious method for producing pellets of this invention pursuant to this invention is a method in which the conversion of a solution or slurry of Components (A) and (B), including any optional additional components, into a flowing melt blend is conducted at an elevated temperature in an operating devol extruder, and in which the extrudate from the devol extruder is pelletized before or after the extrudate solidifies or is solidified. In conducting such a process in which a flowing melt blend is formed in a devol extruder, the solvent used in forming the solution or slurry is concurrently vaporized, and preferably recovered for recycle. In this way, the weight ratio of Component (A):Component (B) in the solution or slurry and in the melt blend remain within the desirable range of 88:12 to 98:2, and the extrudate from the devol extruder can thus be pelletized before or after the extrudate solidifies or is solidified. The solution or slurry introduced into the devol extruder should be sufficiently concentrated so that it can be of extrudable viscosity. Typically, such solution or slurry will contain in the range of 40 to 80 wt% of total components with the total amount of Components (A) and (B) in the solution or slurry as introduced into the devol extruder being in the range of 60 to 70 wt%, these weight percentages being based on the total weight of the solution or slurry.

The conversion of the extrudate into solidified pellets by such process technology is characterized in that during pellet formation, pellet handling, and pellet usage, the pellets are not accompanied by, or result in formation of, unacceptable quantities of air-entrainable dusts, even though some smaller granules may be formed.

Accordingly, this efficacious method of forming the pellets of this invention wherein a devol extruder is utilized is a method which comprises:

- converting an admixture of extrudable viscosity comprising a solution or slurry comprised of Components (A) and (B) and any optional additional components in a vaporizable solvent, into a flowing melt blend in a devol extruder that is adapted and operated (i) to separate in the devol extruder vaporizable solvent from the solution or slurry and/or from a flowing melt blend formed from such solution or slurry; and (ii) to form as extrudate a polymer melt or polymer flow of said flowing melt blend;
- having the extrudate pass through a die to thereby form one or more traveling strands of molten BAPC; and
- pelletizing such strand(s) by enabling and/or causing such traveling strand(s) to solidify and be broken, subdivided, or otherwise converted into pellets of the BAPC; and
- subjecting the pellets to size classification to remove and recover from such product (a) oversized particles, if any, and (b) fines, if any, that may be present in such product.

Desirably, the solvent that is separated during the operation is recovered for recycle in the overall operation.

The solvents used in forming the solutions or slurries of Components (A) and (B) plus any additional optional ingredient(s) for use with a devol extruder can be any liquid solvent that is capable of being vaporized at a temperature below that at which the components present in the solution or slurry would begin to undergo thermal degradation, and that does not adversely react with any component of the solution or slurry whether or not in the solution or slurry. Typically, the solvent is composed of one or more halogenated solvents that have boiling temperatures below 150°C at atmospheric pressures. Typical halogenated solvents are those in which each halogen atom is a bromine atom or a chlorine atom or in which the solvent contains at least one bromine atom and at least one chlorine atom. Less preferred are solvents containing one or more halogen atoms other than bromine atoms and/or chlorine atoms. The term "vaporizable" simply means that the solvent should boil at a temperature below that at which the particular mixture of components in the initial solution or slurry would begin to undergo an unacceptable amount of thermal degradation. This temperature will of course vary from case to case depending upon such factors as the identity and thermal characteristics of the various components present in the solution or slurry, the length of time, if any, that the solution or slurry is at a threshold decomposition temperature, and the quality control specifications imposed upon the composition of the finished pellets of this invention. Non-limiting examples of suitable organic solvents include dichloromethane, dibromomethane, bromochloromethane, bromotri-chloromethane, chloroform, carbon tetrachloride, 1,2-dibromoethane, 1,1-dibromoethane, 1-bromo-2-chloroethane, 1,2-dichloroethane, 1,2-dibromopropane, 1-bromo-3-chloropropane, 1-bromobutane, 2-bromobutane, 2-bromo-2-methylpropane, 1-bromopentane, 1-bromo-2-methyl-butane, 1-bromohexane, 1-bromoheptane, bromocyclohexane, and liquid isomers, homologs, or analogs thereof. Liquid mixtures of two or more such compounds can be used. Bromochloromethane is a particularly desirable solvent because of its availability, relatively low cost, and desirable solvency and vaporization characteristics. If a solvent exchange procedure is used, such halogenated solvent can be replaced for example by a vaporizable liquid aromatic hydrocarbon solvent.

There are a number of various ways of forming a flowing melt blend of Components (A) and (B) and any other optional components utilized therewith, a few of which are schematically illustrated in FIGS. 1 through 4. FIGS. 1 through 3 include use of a devol extruder, whereas FIG. 4 utilizes a compounding extruder. In FIGS. 1, 2, and 3, like parts are

represented by like numerals, and the descriptions thereof reference is made, for convenience, solely to components (A) and (B). Other optional components can be included in the feeds, typically along with the feed of component (B).

The system shown in the schematic block flow diagram of FIG. 1 involves separate feeds of solutions or slurries of components (A) and (B). These solutions or slurries should be of sufficient concentration as to be of extrudable viscosity in the devol extruder. More particularly, the system comprises a devol extruder **10** equipped with a plurality of solvent vents represented by arrows **20.** From a source **12** of a solution or slurry of Component (A) is fed a flow of such solution or slurry via line **16** into devol extruder **10.** Concurrently, from a source **14** of a solution or slurry of Component (B) is fed a flow of such solution or slurry via line **18** into devol extruder **10.** As the mixture of these solutions is heated, and transported in devol extruder **10,** the solvent is vaporized and released from the extruder via vents represented by arrows **20.** Typically, these vapors are collectively transferred via a manifold (not shown) leading to condensing apparatus (not shown), or are individually transferred via suitable vent lines (not shown) to a condensing apparatus (not shown). In devol extruder 10 the temperature is regulated so that a flowing melt blend of Components (A) and (B) is formed. This melt blend is expelled from the downstream end of devol extruder 10, typically through a die (not shown) to form one or more continuously flowing strands **22** of the melt blend. This flow of one or more strands enters pelletizing system **25,** wherein the strands are cooled into solid form and converted into pellets of a desired shape and size.

The system shown in the schematic block flow diagram of FIG. 2 is the same as that depicted in FIG. 1, except for the feed system. In FIG. 2 the initial separate feeds of solutions or slurries of Components (A) and (B) are transmitted from their respective sources **12** and **14** to a mixer **17** to form a substantially homogeneous solution or slurry of Components (A) and (B) which is then transferred as illustrated via line **19** into devol extruder **10.** Otherwise, the operation of the system in FIG. 2 is the same as the operation in FIG. 1.

A different system for forming a flowing melt blend of Components (A) and (B) is schematically depicted in FIG. 3. This system utilizes both a devol extruder and a compounding extruder in the operation. Thus, in FIG. 3, a source **32** of Component (A) feeds Component (A) as illustrated by line **36** to devol extruder **10.** The operation of devol extruder 10 is the same as in FIG. 1, except that the devol extruder **10** receives at a suitable entry point downstream from the feed of Component (A) illustrated by line **36,** a feed of component (B) from compounding extruder **40,** as illustrated by line **42.** This feed from compounding extruder **40** is generated by the addition from source **34** of component (B) as illustrated by line **35** at a locus near the upstream end of devol extruder **10.** Thus, in this operation, compounding extruder **40** melts and pumps component (B) to devol extruder **10,** and devol extruder **10** mixes the molten component streams to form *in situ* the flowing melt blend which is then expelled from devol extruder **10,** typically through a die, to form one or more strands, illustrated by line **22,** which are delivered under the force generated in the compounding extruder into pelletizing system **25,** wherein the strands are cooled into solid form and converted into pellets of a desired shape and size. Systems for accomplishing these strand cooling and pelletizing operations are described and depicted in U.S. Patent Application Publication 2007/0185280 and in International Publication Number WO 2008/011477.

FIG. 4 schematically depicts a system for forming a flowing melt blend of Components (A) and (B) for pelletization, which system utilizes a compounding extruder as the means for forming such flowing melt blend. In the system of FIG. 4, separate feeds of dry Components (A) and (B) constitute the feed materials for forming the flowing melt blend. Thus, the system depicted in FIG. 4 comprises compounding extruder **40** equipped with a feed entry system such as a hopper into which are separately fed a dry feed of Component (A), typically in powder form, from source **62** and a dry feed of component (B), typically in pellet form, from source **34** but which can be in a powder form, if desired. These two feeds are depicted in FIG. 4 as feed lines **65** and **35,** respectively. The compounding extruder melts and blends Components (A) and (B) and pumps them, typically through a die (not shown), to form one or more molten strands illustrated as line **52,** such strands being composed of the desired blend of Components (A) and (B). The one or more strands of this blend are then delivered to and processed into pellets in pelletizing system **25,** such as referred to in connection with Figures 1, 2, and 3.

<u>*Pellets of the Invention*</u>

The pellets of this invention as produced can be of various sizes and shapes. Typically, they are in a size range of 0.95 cm (3/8-inch) to 20 standard U.S. mesh size and which, as produced, contain only small amount of particles of smaller size *(e.g.,* no more than 5 wt%). The amount of particles in the-dust size range (*i.e.*, in the range of 20 to 840 microns) is typically no more than about 5 wt%.

The following Examples illustrate the preparation of the APC's, the bromination of APC's to form BAPC's, the pelletization of the BAPC and test work showing the dust free characteristics of the pellets of this invention. These Examples are given for purposes of illustration and are not intended to impose limits upon the generic scope of the invention.

**EXAMPLE 1**

*Preparation of an APC, a Substrate for Bromination*

General: A spherical glass 12-liter creased reactor with oil jacket was equipped with a reflux condenser, distillation head, submerged thermal couple, bottom drain valve, and stainless steel internal cooling coils. Temperature was tightly maintained at a set point via PID controller that regulates water flow to the cooling coils. Vigorous agitation was accomplished by means of an overhead stirring assembly comprised of 19 mm OD glass shaft with two sets of glass impellers, one set pitched and the other flat, fused to the shaft. The reactor is essentially free of all wetted PTFE parts or other polymeric fluorinated materials or elastomers.

The reactor was maintained under an inert dry $N_2$ atmosphere during all operations. The reactor was charged with the chain transfer agent(s) through a dip leg by means of a diaphragm pump. Alkyl lithium, additional solvents and the amine promoter (TMEDA) were all fed subsurface to the stirred chain transfer agent(s) through the same dip leg. Styrene was pumped into the reactor by means of a metering pump through a 3" cylindrical column (1.75" dia. ≈100 g) of Basic Aluminum Oxide (EMD Chemicals, Aluminum oxide 90, mesh 70-230, column chromatography grade) and delivered as a fine stream or spray above the surface of the reaction mixture through two 1/16" OD feed nozzles.

After some product work-up, the resultant crude product formed was then subjected to further purification in a wiped film evaporator (WFE). This provided purified precursor product for bromination.

Six runs for preparing the purified precursor product were carried out under quite similar conditions. The details of Run 1 are presented in the following text. Table 1 summarizes the conditions used and results of each of these six runs.

*Run 1 (810 $M_w$ 1.32 PD)*

**Reaction** - Toluene 4758 g, (5.5 liters, 51.64 mol) was charged to the reactor previously heated to refluxed and azeotropically dried over a 4 hour period; Karl Fischer moisture analysis indicated 34 ppm residual $H_2O$, this was dried with 2.1 g of n-BuLi solution. The dried toluene was cooled to 78° C with the oil jacket and PID controller operating the coiling coils both set at that temperature. Upon cooling to the set point temperature, 89.2 g n-BuLi solution (2M in cyclohexane, 0.230 mol) was charged through the dip leg below the surface of the gently agitated (300 rpm) toluene reaction mixture. The feed line was then flushed with 75 ml of anhydrous toluene. Next, 40.6 g of *N,N,N',N'*-Tetramethylethylenediamine (TMEDA, 0.349 mol) was charged to the reactor through the subsurface feed line forming the characteristic bright red color of TMEDA complexed benzyl lithium anion with concomitant off gassing of butane. The subsurface line was flushed with a second 75 ml aliquot of anhydrous toluene via metering pump. Additionally 350 ml of anhydrous toluene was fed at a constant rate during the anionic chain transfer polymerization process. Reactor agitation was increased to 510 rpm and 2948 g of styrene (99+%, 28.31 mol) were fed over 180 minutes. The well-calibrated metering pump was programmed to feed at a constant rate of 16.4 g/min. Anhydrous cyclohexane (2x200 ml) was charged to the styrene feed system to flush the alumina bed. The styrene feed to the reactor was deemed complete when no further heat of reaction was observed generally signified by the closing of the automated control valve on the coiling coils.

**Product Work-Up, Including WFE Purification -** The set point of PID temperature controller was maintained at 78°C and water was fed through the cooling coils as needed while the flow of the hot oil was altered to bypass the reactor jacket. The reaction mixture was quenched at 78°C with a 50 ml aliquot of deoxygenated water resulting in a water white turbid mixture. The reaction mixture was washed with deoxygenated water (3 x 650 ml). Phase cuts were rapid and required little settling time. Water and any rag or emulsion was removed through the bottom drain valve. The temperature of the oil jacket was increased to 130°C while the control valve to the cooling coils was turned off. Cyclohexane, residual moisture and toluene are distilled through a simple distillation head (1 atm.) until a pot temperature of 116°C was reached. An aliquot was removed for analysis via GPC (Mp: 1.97, $M_n$: 464, $M_w$: 711, $M_z$: 1046, PD: 1.53). The crude reaction mixture, 6368.4 g, was stripped via continuous operation of excess toluene to yield 3508 g of an intermediate product stream having this GPC analysis: $M_p$: 300, $M_n$: 475, $M_w$: 715, $M_z$: 1043, PD: 1.51. The continuous stripping was accomplished by means of wiped film evaporator (WFE, a.k.a. Pope Still). WFE operating conditions were as follows: feed rate = 1.33 L/hr, oil jacket temperature = 185°C, Pressure = 80 mmHg and condenser temperature = 0°C. Additionally 734 g of toluene was collected in a dry ice trap, while the cold finger condensed 1960 g of a mixture of toluene and 1,3-diphenylpropane. A second pass of the concentrate through the WFE produced 2886 g of an oligomeric mixture with the following GPC profile: $M_p$: 404, $M_n$: 615, $M_w$: 810, $M_z$: 1081, PD: 1.32. WFE operating conditions were as follows: feed rate = 1.33 L/hr, oil jacket temperature = 180°C, Pressure = <0.1 mmHg and condenser temperature = 0 °C. A mixture (539 g) of 1,3-diphenylpropane and its structural isomers (methylated diphenylethanes) were collected as a distillate. The principal product from this operation was a batch of APC suitable for bromination.

TABLE 1

| Reaction | Run 1 | Run 2 | Run 3 | Run 4 | Run 5 | Run 6 |
|---|---|---|---|---|---|---|
| Toluene Charged | 4758 g[(1)], 5.5 L, 51.64 mol | 4758 g[(2)], 5.5 L, 51.64 mol | 4758 g[(2)], 5.5 L, 51.64 mol | 4758 g[(3)], 5.5 L, 51.64 mol | 4758 g[(4)], 5.5 L, 51.64 mol | 4758 g[(5)], 5.5 L, 51.64 mol |
| n-BuLi Charged | 89.2 g solution (2M in $C_6H_{12}$, 0.230 mol) | 87.8 g solution (2M in $C_6H_{12}$, 0.226 mol) | 86.8 g solution (2M in $C_6H_{12}$, 0.224 mol) | 83.6 g solution (2M in $C_6H_{12}$, 0.215 mol) | 87.6 g solution (2M in $C_6H_{12}$, 0.226 mol) | 88.2 g solution : (2M in $C_6H_{12}$, 0.227 mol) |
| TMEDA Charged | 40.6 g (0.349 mol) | 39.7 g (0.342 mol) | 40.0 g (0.344 mol) | 39.9 g (0.343 mol) | 39.6 g (0.341 mol) | 41.5 g (0.357 mol) |
| Styrene Charged | 2948 g (99+% 28.31 mol) | 2948 g (99+%, 28.31 mol) | 2942 g (99+% 28.25 mol) | 2945 g 99+%, (28.28 mol) | 2944 g (99+%, 28.28 mol) | 2948 g (99+%, 28.31 mol) |
| Time of Styrene Charge | 180 minutes | 180 minutes | 180 minutes | 180 minutes | 180 minutes | 180 minutes |
| Feed Rate of Styrene Charge | 16.4 g/min | 16.4 g/min | 16.3 g/min | 16.4 g/min | 16.4 g/min | 16.4 g/min |
| GPC of Crude | $M_p$: 1.97, $M_n$: 464, $M_w$: 711, $M_z$: 1046, PD: 1.53 | $M_p$: 192, $M_n$: 449, $M_w$: 707, $M_z$: 1098, PD: 1.58 | $M_p$: 192, $M_n$: 459, $M_w$: 723, $M_z$: 1097, PD: 1.58 | $M_p$: 193, $M_n$: 461, $M_w$: 724, $M_z$: 1091, PD: 1.57 | $M_p$: 306, $M_n$: 481, $M_w$: 765, $M_z$: 1170, PD: 1.59 | $M_p$: 194, $M_n$: 423, $M_w$: 640, $M_z$: 955, PD: 1.51 |
| Work-up & WFE Purification | | | | | | |
| Wt. of Crude Product | 6368.4 g | 6564 g | 7499 g | 7931.7 g | 7480 g | 6986 g |
| Yield of Stripped Product | 3508 g | 3497 g | 3449 g | 3439 g | 3465 g | 3555 g |
| GPC of Stripped Product | $M_p$: 300, $M_n$: 475, $M_w$: 715, $M_z$: 1043, PD: | $M_p$: 302, $M_n$: 473, $M_w$: 711, $M_z$: 1035, PD: | $M_p$: 302, $M_n$: 485, $M_w$: 746, $M_z$: 1118, PD: | $M_p$: 314, $M_n$: 520, $M_w$: 785, $M_z$: 1160, PD: | $M_p$: 302, $M_n$: 505, $M_w$: 760, $M_z$: 1102, PD: | $M_p$: 304, $M_n$: 456, $M_w$: 669, $M_z$: 972, PD: |
| | 1.51 | 1.50 | 1.54 | 1.51 | 1.51 | 1.47 |
| Amt. of APC (Product from 2nd WFE Pass) | 2886 g | 2075 g | 2998 g | 3047 g | 3073 g | 2975 g |
| GPC Profile of APC | $M_p$: 404, $M_n$: 615, $M_w$: 810, $M_z$: 1081, PD: 1.32 | $M_p$: 414, $M_n$: 589, $M_w$: 793, $M_z$: 1083, PD: 1.35 | $M_p$: 404, $M_n$: 578, $M_w$: 799, $M_z$: 1116, PD: 1.38 | $M_p$: 412, $M_n$: 584, $M_w$: 808, $M_z$: 1127, PD: 1.38 | $M_p$: 409, $M_n$: 598, $M_w$: 823, $M_z$: 1140, PD: 1.38 | $M_p$: 408, $M_n$: 554, $M_w$: 743, $M_z$: 1029, PD: 1.34 |
| WFE Operating Conditions | | | | | | |
| Feed Rate | 1.33 L/hr | 1.33 L/hr | 1.33 L/hr | 1.33 L/hr | 1.33 L/hr | 1.33 L/hr |

(continued)

| Reaction | Run 1 | Run 2 | Run 3 | Run 4 | Run 5 | Run 6 |
|---|---|---|---|---|---|---|
| Oil Jacket Temperature | 180°C | 158°C | 158°C | 158°C | 185°C | 158°C |
| Pressure | <0.1 mmHg | <0.1 mmHg | <0.1 mmHg | <0.1 mmHg | <0.1 mmHg | <0.1 mmHg |
| Condenser Temperature | 0°C | 0°C | 0°C | 0°C | 0°C | 0°C |
| Amount of Volatiles Stripped by WFE in 2nd Pass | 539 g | 290 g | 374 g | 329 g | 354 g | 500 g |
| (1) Refluxed and azeotropically dried for 4 hours, Karl Fischer indicated 34 ppm $H_2O$; dried this with 2.1 g of n-BuLi solution.<br>(2) Dried with 2.3 g of n-BuLi solution.<br>(3) Dried with 2.7 g of n-BuLi solution.<br>(4) Dried with 3.2 g of n-BuLi solution.<br>(5) Dried with 2.4 g of n-BuLi solution. | | | | | | |

In a 18.93 l (five-gallon) bucket with a 5.08 cm (2-inch) bung and a 1.27 cm (½-inch) bung the following materials were mixed: 2886 g of APC from Run 1, 2924 g of APC from Run 2, 2998 g of APC from Run 3, 3047 g of APC from Run 4, 3073 g of APC from Run 5, 2975 g of APC from Run 6 and 4553 g of bromochloromethane (BCM). The drum was rolled for 45 minutes to make sure the APC was well mixed then poured into three 5-liter bottles. The GPC profile of these three lots were as follows:

Lot A: $M_p$: 406, $M_n$: 579, $M_w$: 793, $M_z$: 1111, PD: 1.37;

Lot B: $M_p$: 406, $M_n$: 575, $M_w$: 785, $M_z$: 1088, PD: 1.37;

Lot C: $M_p$: 406, $M_n$: 577, $M_w$: 785, $M_z$: 1083, PD: 1.36.

## EXAMPLE 2

*Preparation of BAPC*

Lots A, B, and C above were individually brominated in three individual batches.

Batch 1 Bromination - This bromination was conducted in a 50 L glass reactor outfitted with a liquid jacket and temperature control with the Huber system, agitator, a reflux overhead condenser cooled to -7°C, gas evolution port connected to a scrubber by means of two separate 1.27 cm (half inch) O.D. Teflon® tubing lines, a BCM feed line from a holding tank, and a bromine feed line from a bromine storage tank.

The reactor was charged with 15 kg of BCM and cooled to - 4°C. The APC feed was prepared as a 14.8 kg solution of APC from Lot A above as a 25 wt% solution in BCM. This solution was co-fed with 20.8 kg of 0.5 wt% $AlBr_3$ in bromine. The solutions were co-fed through Teflon® polymer tubing ending in close proximity (less than 50 mm) subsurface to the reaction mixture. The 25 wt% substrate solution in BCM and the bromine solution were fed simultaneously (at mass-rates proportional to their respective mass) over a 180-min period, with care to ensure a continuous and constant-rate addition of both feeds so that the feeds finish together. Hydrogen bromide was formed and began to vigorously evolve after about 1 h. A 22-L flask with a gas-scrubbing tower was charged with 13 kg of water. The scrubber was used to trap the formed HBr vented through the two Teflon® lines from the outlets on the reflux condenser. At the end of the addition, the reaction mixture was allowed to warm to 25°C over a 60-minute period, and then held at 25°C for 30 min prior to quenching and workup.

The workup of the bromination reaction was conducted in a 100-L glass jacketed reactor. It was charged with 20 kg of water, the water and quenched organic phase were kept cool (at about 5°C) by maintaining a jacket temperature of 1°C. The transfer was conducted by means of a vacuum differential. The quench vessel was placed under a vacuum of about 300 mmHg. The transfer of the bromination reaction mixture was conducted through a 0.96 cm (3/8") Teflon®

polymer line leading from the bottom of the bromination reactor into the headspace of the quench reactor. The temperature in the quench reactor increased during the 30-40 min addition period to about 15°C. The bromination reactor and transfer line were rinsed with 8 kg of BCM, which was sent to the quench reactor where it mixed with the brominated substrate solution. After agitating for about 15 minutes, the mixture was allowed to settle for 5 minutes. The phases separated readily.

The bottom phase contained product and free bromine. It was collected from the reactor into three 18.93 l (5-gal) carboys each of which had been previously charged with 3.33 Kg of 0.8% $NaBH_4$ in 10% aqueous NaOH. Because there was an extractable present in the carboys' material construction, contact time of the BCM solutions with the carboy was kept to a minimum. Negligible to no contamination of the product by the extractable was observed in the product solutions by NMR. As each carboy was filled, it was vigorously agitated by hand to decolorize the bromination reaction mixture by reduction of $Br_2$ and its active bromine derivatives with $NaBH_4$. The upper aqueous phase in the quench vessel was then collected and treated with sodium sulfite solution to reduce residual bromine before disposal or recovery for bromide value. The quench reactor was additionally washed with 4 kg of water, and sent for disposal. The contents of the three product solution/borohydride carboys were then returned to the reactor, and the aqueous portion was diluted with 10 kg of additional water to reduce the caustic concentration to prevent glass erosion. After checking for the presence of borohydride anion ($BH_4^{\ominus}$), the reactor contents were heated to reflux for 30 minutes by setting the internal reaction temperature to 70°C though the temperature peaked at 62°C. It was then cooled to 40°C and left to settle, then drained to carboys.

Batch 2 Bromination - This run was performed as in the Batch 1 run except that (a) the APC feed was 10.6 kg with a $M_w$ =785 and a PD=1.37, (b) the weight of the $AlBr_3$ in bromine solution was 15.0 kg, (c) the solutions were fed simultaneously over a 133-min period.

Batch 3 Bromination - This bromination was performed as in the Batch 2 run except that the APC feed was 11.4 kg, and the weight of the $AlBr_3$ in bromine solution was 15.3 kg.

The three runs produced 172 kg of solution with 20 wt% BAPC were obtained each. These batches were combined, and then 11 kg of the resultant solution were fed to 17 kg of water at 93°C over a 2-hour period. BCM was distilled overhead while the product was fed to the precipitation vessel, the product forming a fine water-slurry in the vessel. After cooling, the BAPC was isolated by centrifugation, and dried in an oven under a purge of nitrogen for 36 hours at 105°C and then under vacuum at 105°C for 6 hours. The dry blended composite yielded 34 kg of BAPC in powder form.

The properties and characteristics of the BAPC formed in Example 2 are summarized in Table 2.

**TABLE 2**

| | | | | |
|---|---|---|---|---|
| Residual BCM (ppm) | 200 | | FP GPC | |
| Residual $H_2O$ (ppm) | < 50 | | $M_w$ | 3420 |
| % Br (nmr) | 74 | | $M_n$ | 2590 |
| XRF-FP | 74.2 | | $M_z$ | 4610 |
| Tg (°C) (DSC) | 125.5 | | PD | 1.3 |
| | | | Color (Solids) | |
| | | | L | 94.89 |
| TGA | | | A | -0.93 |
| 1% Wt. Loss (°C) | 320.54 | | B | 5.43 |
| 5% Wt. Loss (°C) | 359.03 | | YI | 9.52 |
| 10% Wt. Loss (°C) | 371.89 | | Color (Solution) | |
| 50% Wt. Loss (°C) | 406.17 | | L | 96.24 |
| | | | A | -1.84 |
| | | | B | 7.84 |
| Thermal HBr-FP 300°C (ppm) | 255 | | Delta E | 9.01 |

**EXAMPLE 3**

*Formation of Pellets of a Blend of a BAPC, HIPS, and an Antioxidant Mixture*

The pellets of this Example were produced from 89.9 parts by weight of low molecular weight BAPC produced as in Example 2, 10.0 parts by weight of high impact polystyrene (Dow 801; The Dow Chemical Company), and 0.1 part by weight of a 50:50 (wt:wt) mixture of pentaerythritol tetrakis(3-(3,5-di-tert-butyl-4-hydroxyphenyl)propionate) (ETHANOX® 310 Antioxidant; Albemarle Corporation, and ETHAPHOS® 368 Antioxidant; Albemarle Corporation). The low molecular weight brominated aromatic polymer in powder form and the antioxidants were fed through a K-Tron KCLK20 powder feeder while the high impact polystyrene was fed through a K-Tron KCLQX3 pellet feeder. Those feeders transferred the material to a Werner & Pfleiderer ZSK30 twin-screw extruder operated at 125 rpm. The feed rate was 9 kg/hr. The temperature profile of the extruder was 110-150-160-160-175°C. The material emerged from the extruder through a die containing multiple orifices and the extruded strands were passed through an iced-water bath. The strands were then pelletized using a laboratory scale chopper.

**EXAMPLE 4**

*Formation of Pellets of a Blend of BAPC, a Polyolefin Copolymer and an Antioxidant Mixture*

The procedure of Example 3 was repeated except that 7.0 parts by weight of the Dow 801 high impact polystyrene and 3.0 parts by weight of ethylene-octene copolymer (ENGAGE® Plastic Resin; DuPont Dow Elastomers, Wilmington, Delaware) were used in place of the 10 parts by weight of high impact polystyrene.

**EXAMPLE 5**

*Formation of Pellets of a Blend of BAPC, a General Purpose Crystal Polystyrene, and an Antioxidant Mixture*

The procedure of Example 3 was repeated except that 10.0 parts by weight of general purpose crystal polystyrene (Americas Styrenics XU; The Woodlands, Texas) was used in place of the 10 parts by weight of high impact polystyrene. This general purpose crystal polystyrene, as received, was in the form of pellets.

**EXAMPLE 6**

*Formation of Pellets of a Blend of BAPC, General Purpose Crystal Polystyrene, and an Antioxidant Mixture*

An alternative procedure to that of Example 5 of this Example was to grind the above general purpose crystal polystyrene pellets (Americas Styrenics XU) into powder and then hand mix the powder with the other two components. The resultant mixture was fed through a K-Tron KCLK20 powder feeder, transferred, and extruded as in Example 3 except that the twin screw extruder was operated at 100 rpm and its temperature profile was 110-150-160-160-190°C. The material emerged from the extruder through a die containing multiple orifices and the extruded strands were cooled on a conveying belt. The strands were then pelletized using a laboratory scale chopper.

**EXAMPLE 7**

*Formation of Pellets of a Blend of BAPC, a Mixture of a General Purpose Crystal Polystyrene and a Polyolefin Copolymer, and an Antioxidant Mixture Crystal*

The procedure of Example 3 was repeated except that 7.0 parts by weight of general purpose crystal polystyrene (Americas Styrenics XU; The Woodlands, Texas), 3.0 parts by weight of ethylene-octene copolymer (ENGAGE® Plastic Resin; DuPont Dow Elastomers, Wilmington, Delaware) were used in place of the 10 parts by weight of high impact polystyrene.

**EXAMPLE 8**

*Formation of Pellets of a Blend of BAPC, HIPS, and an Antioxidant Mixture*

The procedure of Example 3 was repeated except that 94.9 parts by weight of BAPC produced as in Example 1 and 5.0 parts by weight of the Dow 801 high impact polystyrene were used, along with 0.1 part by weight of the same

antioxidant mixture. In this instance the processing of the mixture was the same as in Example 2 except that the mixture was fed to the extruder at a feed rate of 18 kg/hr.

**EXAMPLE 9**

*Preparation and Properties of Substrate Thermoplastic Polymers Flame Retarded by Use of Pellets of this Invention*

To illustrate the flame retardant effectiveness and properties of pellets of this invention, a series of blends was prepared in which flame retardant amounts of respective groups of pellets of this invention formed in Examples 3-5 and 7-8 above were melt blended with various thermoplastic polymers or mixtures of such polymers and BrightSun® HB antimony trioxide to form test pieces. These were then subjected to various standard ASTM test procedures. The tests performed on the test samples were as follows: Tensile Strength (D638) specimen type 1; Heat Deflection Temperature under Load (D648) 0.32 cm (1/8") at 1820.22 x $10^3$ Pa (264 psi); Vicat softening temperature (D1525) 0.32 cm (1/8") at 1 Kg; Notched-Izod Impact Strength (D256) method A; and Melt Flow Rate (D1238) procedure A, 200°C/5Kg for HIPS. The UL-94 flammability test was performed on 0.32 cm (1/8") bars.

Table 3 summarizes the compositions of the test pieces and the test results. In Table 3, MFR denotes melt flow rate as measured by ASTM D1238 procedure A at 200°C and 5 kg for HIPS blends.

**TABLE 3**

| | Control | Pellets of the Invention | | | | | |
|---|---|---|---|---|---|---|---|
| **Composition Tested, Wt %** | Sample A | Sample 1 | Sample 2 | Sample 3 | Sample 4 | Sample 5 | Sample 6 |
| Dow 801 (HIPS) | 82.5 | 82.5 | 81.8 | 81.0 | 81.0 | 81.0 | 81.0 |
| BAPC Powder of Ex. 2 | 13.5 | | | | | | |
| BAPC Pellets of Ex. 8 | | 13.5 | 14.2 | | | | |
| BACP Pellets of Ex. 3 | | | | 15.0 | | | |
| BAPC Pellets of Ex. 4 | | | | | 15.0 | | |
| BAPC Pellets of Ex. 5 | | | | | | 15.0 | |
| BAPC Pellets of Ex. 7 | | | | | | | 15.0 |
| Brightsun HB ($Sb_2O_3$) | 4.0 | 4.0 | 4.0 | 4.0 | 4.0 | 4.0 | 4.0 |
| **Properties** | | | | | | | |
| Tensile Strength, Pa (psi) | 223.39 x $10^5$ (3240) | 221.87 x $10^5$ (3218) | 219.12 x $10^5$ (3178) | 208.15 x $10^5$ (3019) | 214.08 x $10^5$ (3105) | 221.94 x $10^5$ (3219) | 223.25 x $10^5$ (3238) |
| Tensile Modulus, Pa (psi) | 21580.87 x $10^5$ (313004) | 21130.56 x $10^5$ (306473) | 21136.29 x $10^5$ (306556) | 22591.56 x $10^5$ (327663) | 21054.59 x $10^5$ (305371) | 21715.80 x $10^5$ (314961) | 21235.30 x $10^5$ (307992) |
| HDT, 1820.22 x $10^3$ Pa (264 psi), °C | 73.1 | 73.1 | 73.1 | 73.3 | 73.2 | 72.3 | 72.8 |
| Vicat, °C | 100.5 | 100.3 | 100.6 | 100.4 | 100.6 | 100.5 | 100.8 |

(continued)

| Properties | | | | | | | |
|---|---|---|---|---|---|---|---|
| Notched-Izod Impact, J/cm$^2$ (ft-lb/in) | 0.327 (1.56) | 0.318 (1.51) | 0.308 (1.479 | 0.313 (1.499 | 0.324 (1.54) | 0.308 (1.47) | 0.308 (1.47) |
| UL-94, 0.32 cm (1/8") | V-0 | V-0 | V-0 | V-0 | V-0 | V-0 | V-0 |
| t1+t2, sec | 10 | 14 | 10 | 8 | 9 | 9 | 8 |
| MFR, 200°C/5kg, g/10 min | 11.1 | 11.2 | 11.7 | 11.9 | 11.5 | 11.4 | 11.8 |
| Melt Viscosity 210°C | | | | | | | |
| @ 7300/sec, Pa-s | 40 | 39 | 39 | 38 | 39 | 39 | 40 |
| @ 5000/sec, Pa-s | 51 | 50 | 50 | 50 | 50 | 50 | 50 |
| @ 3000/sec, Pa-s | 72 | 70 | 71 | 71 | 70 | 71 | 71 |
| @ 1000/sec, Pa-s | 150 | 146 | 144 | 146 | 145 | 144 | 144 |
| @ 500/sec, Pa-s | 232 | 229 | 225 | 229 | 225 | 224 | 224 |
| @ 7300/sec, Pa-s | 39 | 39 | 39 | 39 | 38 | 39 | 39 |
| @ 5000/sec, Pa-s | 51 | 50 | 51 | 51 | 49 | 50 | 49 |
| @ 3000/sec, Pa-s | 73 | 71 | 72 | 73 | 70 | 71 | 69 |
| @ 1000/sec, Pa-s | 153 | 148 | 149 | 151 | | 147 | 143 |
| @ 500/sec, Pa-s | 239 | 232 | 234 | | | 230 | 229 |

In another group of experimental runs referred to in Examples 10 to 19 below, APC was prepared and brominated to form BAPC which was then utilized in preparing pellets.

**EXAMPLE 10**

*Use of Fresh Reactants to Form Crude APC, a Precursor Material for WFE Treatment*

A glass-lined, 378.5 1 (100-gallon) jacketed reactor equipped with an overhead condenser, submerged thermal well/thermal couple and a bottom drain valve. Temperature was maintained at a set point by controlling the temperature of the water flowing through the jacket using a steam control valve. Vigorous agitation was accomplished by means of a three-blade, retreat-curve agitator on a variable speed drive. The reactor is essentially free of all wetted PTFE parts or other polymeric fluorinated materials or elastomers.

The reactor was maintained under an inert dry $N_2$ atmosphere during all operations. The reactor was charged with the chain transfer agent(s) through a dip leg by means of pressure transfer from a portable tank. Alkyl lithium, additional solvents and the amine promoter (TMEDA) were all fed subsurface to the stirred chain transfer agent(s) through the same dip leg. Styrene was pressure transferred from a portable, pressure vessel by means of a metering valve through a 60.96 cm (24") cylindrical column (7.62 cm (3") dia. ~ 2.76 kg (6 lbs.) of 3A mol sieves (Zeochem) and delivered as a fine stream or spray above the surface of the reaction mixture through a slit feed nozzle.

Toluene 63.5 kg (140 pounds), (689 mol) was charged to the reactor; Karl Fischer moisture analysis indicated 7 ppm residual $H_2O$. Agitation began. The solvent was heated to 78°C by applying tempered water to the vessel jacket. Upon reaching the set point temperature, 2.09 kg (4.6 pounds) of TMEDA (18.0 mol), in 4.54 kg (10 pounds) of toluene (49.24 mol) was charged to the reactor through the dip leg below the surface of the agitated toluene reaction mixture. The feed line was then flushed with 9.07 kg (20 pounds) (98 mol) of anhydrous toluene. Next, 2.00 kg (4.4 lb) n-BuLi solution (23.5 wt% in cyclohexane) (7.32 mol n-BuLi) was charged through the subsurface feed line forming the characteristic bright red-orange color of TMEDA complexed benzyl lithium anion with concomitant off gassing of butane. The feed line was then flushed with 9.98 kg (22 pounds) (108 mol) of anhydrous toluene. 197.77 kg (436 lb) of styrene (99+%, 1899 mol, American Styrenics) were fed over 153 minutes. The styrene was added by means of pressure transfer from a nitrogen regulated portable tank through a metering valve at a constant feed rate of 1.29 kg/min (2.84 lb/min). The reactor was allowed to ride for 5 minutes to make certain the reaction was complete.

The reaction mixture was quenched at 70°C with 37.85 l (10 gallons) of 0.75 wt% ammonium chloride solution which had been deoxygenated overnight by sparging with nitrogen gas. The reaction mixture was washed two more times with 37.85 l (10 gallons) of deoxygenated water. Phase cuts were rapid and required little settling time. Water and any rag or emulsion was removed through the bottom drain valve. A sample of the washed crude reaction mixture was analyzed by GPC (Mp: 312, $M_n$: 466, $M_w$: 673, $M_z$: 934, polydispersity (PD): 1.44).

The reactor was heated to atmospheric boiling point using tempered water on the vessel jacket. Steam was then applied to the reactor jacket to increase the temperature of the reactor jacket to 140°C. Cyclohexane, residual moisture and toluene boiled, condensed in the overhead condenser, and drained to a drum until a pot temperature of 135°C was observed. The reactor was cooled to 50°C. Vacuum was applied to the vessel and the reactor was heated to boiling point. Steam was then applied to the reactor jacket to increase the temperature of the reactor jacket to 140°C. Vacuum was used to decrease the reactor pressure to 35 mm Hg. Cyclohexane, residual moisture and toluene boiled, condensed in the overhead condenser, and drained to a drum until a pot temperature of 135°C was observed. An aliquot was removed from the reactor for analysis via GPC (Mp: 314, $M_n$: 468, $M_w$: 676, $M_z$: 940, polydispersity (PD): 1.44). The reaction mass (252.66 kg (557 lbs)) was collected in a 1325 1 (350-gallon) tote bin.

**EXAMPLE 11**

*Partial Use of Recycled Toluene to Form Crude APC, a Precursor Material for WFE Treatment*

In this Example, a portion of a composite composed predominately of toluene, TMEDA, cyclohexane, and 1,3-diphenylpropane recovered from prior runs was used. Thus, this Example demonstrates use of recycled toluene as part of the total toluene charged.

Fresh toluene 18.14 kg (40 pounds), (197 mol) and 44.00 kg (97 lb) of recycled toluene (containing 97.1%, 42.73 kg (94.2 lb), 464 mol toluene; 1.7%, 0.73 kg (1.6 lb), 6.2 mol TMEDA; 0.3%, 0.14 kg (0.3 lb), 0.7 mol, 1,3-diphenlypropane; 0.9%, 0.41 kg (0.9 lb), 4.9 mol cyclohexane) was charged to the reactor; Karl Fischer moisture analysis indicated 7 ppm residual $H_2O$. Agitation began. The solvent was heated to 79° C by applying tempered water to the vessel jacket. Upon reaching the set point temperature, 1.63 kg (3.6 pounds) of fresh make-up TMEDA (12.8 mol), in 4.54 kg (10 pounds) of toluene (49.24 mol) was charged to the reactor through the dip leg below the surface of the agitated toluene reaction mixture. The feed line was then flushed with 9.07 kg (20 pounds) (99 mol) of anhydrous toluene. Next, 2.00 kg (4.4 lb) n-BuLi solution (23.6 wt% in cyclohexane) (7.4 mol n-BuLi) was charged through the subsurface feed line forming the characteristic bright red-orange color of TMEDA complexed benzyl lithium anion with concomitant off gassing of butane. The feed line was then flushed with 9.98 kg (22 pounds) (108 mol) of anhydrous toluene. 195.36 kg (432 lb) of styrene (99+%, 1881 mol, American Styrenics) were fed over 150 minutes. The styrene was added by means of pressure transfer from a nitrogen regulated portable tank through a metering valve at a constant feed rate of 2.88 lb/min. The reactor was allowed to ride for 5 minutes to make certain the reaction was complete.

The reaction mixture was quenched at 70°C with 37.85 1 (10 gallons) of 0.75 wt% ammonium chloride solution which had been deoxygenated overnight. The reaction mixture was washed with a second 37.85 l (10 gallons) of deoxygenated water. Phase cuts were rapid and required little settling time. Water and any rag or emulsion was removed through the bottom drain valve. A sample of the washed crude reaction mixture was analyzed by GPC (Mp: 303, $M_n$: 462, $M_w$: 677, $M_z$: 959, PD: 1.47).

The reactor was heated to atmospheric boiling point using tempered water on the vessel jacket. Steam was then applied to the reactor jacket to increase the temperature of the reactor jacket to 140°C. Cyclohexane, residual moisture and toluene boiled, condensed in the overhead condenser, and drained to a drum until a pot temperature of 135°C was observed. The reactor was cooled to 50°C. Vacuum was applied to the vessel and the reactor was heated to boiling point. Steam was then applied to the reactor jacket to increase the temperature of the reactor jacket to 140°C. Vacuum was used to decrease the reactor pressure to 35 mm Hg. Cyclohexane, residual moisture and toluene boiled, condensed in the overhead condenser, and drained to a drum until a pot temperature of 135°C was observed. An aliquot

was removed from the reactor for analysis via GPC (Mp: 301, $M_n$: 459, $M_w$: 672, $M_z$: 950, PD: 1.46). The reaction mass (246.76 kg (544 lbs)) was collected in a 1325 l (350-gallon) tote bin.

**EXAMPLE 12**

*Blending of Crude APC Batches and WFE Purification of the Blend to Form APC*

A total of 12 all fresh runs were made following the general procedure of Example 10 above with the $M_n$ after the vacuum strip ranging from 403 to 483 and an $M_w$ ranging from 566 to 721. A total of 13 recycled toluene runs were made following the general procedure of Example 11 above with the $M_n$ after the vacuum strip ranging from 404 to 463 and an $M_w$ ranging from 568 to 688. Possible causes of these ranges are small variations in the temperature, stirring speed or feed rate. The 12 all fresh runs were combined with the 13 recycle runs and run through an industrial size wiped film evaporator (WFE), a sample was analyzed by GPC: (Mp: 413, $M_n$: 552, $M_w$: 693, $M_z$: 878, PD: 1.26). A 18.93 l (five-gallon) sample of the composite was stripped in the laboratory giving a very similar result: ($M_p$: 418, $M_n$: 569, $M_w$: 729, $M_z$: 946, PD: 1.28).

**EXAMPLE 13**

*Preparation of BAPC Solutions*

Two batches of APC's formed as in Example 12 in the form of solutions in BCM were individually brominated in a 50-gallon glass-lined, jacketed vessel capable of using ethylene glycol for heat exchange (heating or cooling) or steam for heating. The reactor was equipped with a pitched-blade glass-lined agitator with a nitrogen seal. Both batch reactions had a target reaction feed time of about 3 hours, a target reaction temperature between -2 to 2°C with a targeted final bromine concentration of 74 ± 0.5 wt%. The bromination reaction involved separately and concurrently feeding bromine and the APC over a three hour period. The ratio of the APC to bromine was held constant and closely monitored throughout the reaction to create a final product with a specified bromine concentration. After feeding was complete, the reaction mass was held in the reactor for 45 minutes while the temperature was brought up to ~6°C. Any excess bromine in the reaction mass was quenched with water. This was followed by a water wash, and then another wash using a caustic and sodium borohydride solution at ~60°C to neutralize remaining HBr. The presence of sodium borohydride in the wash solution is deemed to break down aminic compounds present in the reaction mass that can form color bodies in the final isolated product. The reaction mass is finally washed again with water to a neutral pH.

Bromine was fed via pressure transfer from a stainless steel 18.93 1 (5-gallon) milkcan lined with Teflon® PFA resin (a perfluoroalkoxy copolymer resin; DuPont), the resin being hereinafter referred to as PFA. The milkcan used is 22.9 cm (9") ID, 35.6 cm (14") tall without the liner, with a 0.56 cm (0.22") thick lining around the entire internal surface area of the can. Including the lining, the actual fill volume of the can is ~17.41 1 (~4.6 gallons). The can is equipped with a 0.95 cm (3/8") PFA dipleg, and 3 additional 1.27 cm (½") ports that were used for nitrogen pressure, a PSD with holder, and venting down. A 5.08 cm (2") center port on the can had a PFA plug secured with a Nitronic 60 nut.

There were two feed diplegs used in these reactions. The first dipleg is a solid pipe of Teflon® fluoropolymer, with 2 x 0.64 cm (¼") holes drilled through the entire length of the pipe. There is 0.54 cm (¼") PFA tubing run from top to bottom of each of the void spaces, which are spread 1.91 cm (3/4") apart. The tubing is secured in place at each end with drilled-through pipe-to-tubing male connectors and PFA nuts/ferrules. The other dipleg is similar in shape, but has 0.05 cm (3/8") drilled through fittings on the top flange, with 2 x 0.95 cm (3/8") tubing runs extending through the void space of a hollow pipe of Teflon fluoropolymer. The tubing connects ~50.80 cm (~20 inches) down via PFA fittings to the top of a solid mixing nozzle made of Teflon fluoropolymer. This nozzle is screwed into threads on the inside of the pipe of Teflon polymer, and impinges the two feeds before they enter the reactor through a 0.32 cm (1/8") hole at the bottom of the nozzle. Both diplegs are ~60.96 cm (~24") in length from the bottom flange of the dipleg, and extend into the reactor approximately 5.08 cm (2") above the tip of the agitator blades.

Catalyst was introduced to the reactor through a charge bomb composed of a 2.54 cm (1") stainless steel (SS) block valve, a 1x3.81 cm (1x1½") SS reducer, and a 3.81 cm (1½") full port SS-lined brass block valve. The catalyst charge to the bomb was performed in a $N_2$ purged glove box, through the 3.81 cm (1.5") full port valve. Following the charge, a 1.27 cm (½") SS tee was fitted to the top of the 3.81 cm (1.5") valve to attach a pressure gauge and to charge $N_2$ to the bomb. The entire setup screwed onto a reducing flange on a reactor nozzle via the 2.54 cm (1") block valve.

Aqueous phase cuts were all conducted using a PFA dipleg. It was a length of ½" PFA tubing that was straightened out, and grooved at the end to hold PFA ferrules in place. The ferrules allowed for the tubing to be pushed down and lowered into the reactor for decanting the aqueous phase, but prevented the tubing from coming out of the reactor beyond the drilled through PFA fitting and cap that held the tubing in place. The dipleg tubing ran from the reactor, straight to a box made from Plexiglas® resin that was used for sampling the aqueous material during cuts. There were

deliberately no fittings between the dipleg nozzle at the reactor and this sample point to lower the risk of aqueous exposure related to additional points of failure present in the line.

The BCM product solutions from Batch Numbers 1 and 2 were combined into a single BCM solution.

Table 4 summarizes for each of batch brominations No. 1 and No. 2 the reaction conditions used, the components and amounts thereof used, the analytical results on the products and calculations based thereon, and the properties and composition of two smaller sample batches of isolated BAPC solids.

**TABLE 4**

| **REACTION CONDITIONS** | **BATCH NO. 1** | **BATCH NO. 2** |
|---|---|---|
| Feed Time, min | 176 | 186 |
| Reaction Temperature Range (20 minutes to end) | 0.8/-2.2 | 1/-1.5 |
| Average Reaction Temperature | -0.76 | -0.68 |
| **CHARGES** | | |
| $AlCl_3$, kg (lb) | 0.136 (0.30) | 0.136 (0.30) |
| BCM, heel, kg (lbs) | 131.54 (290) | 131.63 (290.2) |
| Bromine Feed, kg (lbs) | 47.13 (103.9) | 47.81 (105.4) |
| APC Feed, kg (lbs) | 32.98 (72.79 | 34.29 (75.6) |
| APC Feed, wt% in BCM | 26.7 | 25.3 |
| $NaBH_4$ Solution, kg (lbs) | 27.76 (61.2) | 44.59 (98.3) |
| Water Wash, kg (lbs) | 43.09 (95) | 43.09 (95) |
| Product Download in BCM, kg (lbs9 | 177.99 (392.4) | 183.66 (404.99 |
| **ANALYTICAL RESULTS** | | |
| Bromine, wt% | 73.7 | 74.4 |
| BAPC in BCM, wt% | 18.4 | 18.7 |
| **CALCULATIONS** | | |
| $AlCl_3$:$Br_2$ (mole/mole %) | 0.343 | 0.338 |
| $Br_2$:APC, kg/kg (lb/lb) | 5.3 | 5.5 |
| $NaBH_4$:BAPC (neat) kg/kg (lb/lb) | 0.85 | 1.43 |
| BAPC Product Formed, kg (lbs) (theoretical) | 33.52 (73.9) | 33.88 (74.7) |
| BAPC Product Formed, kg (lbs) (actual) | 32.75 (72.2) | 34.34 (75.7) |
| Yield | 97.7% | 101.3% |
| **SOLIDS FROM SAMPLE WORKUP** | | |
| Bromine, wt% | 73.6 | 74.4 |
| Thermal Color, 250°C for 15 minutes | 10.15 | 11.35 |
| Thermal Color, 300°C for 20 minutes | 19.93 | 20.48 |
| Thermal HBr at 300°C, ppm | 198 | 139 |

**EXAMPLE 14**

*Preparation of Pellets from BAPC*

The BCM solution of the two batches BAPC formed in Example 13 was used as feed to a devol extruder utilizing a processing equipment setup as schematically depicted and described in Figs. 2 and 3 of WO 2008/011477, published January 24, 2008. Both of said figures and the description thereof in WO 2008/011477 are incorporated herein by reference. The major difference between the present operation of the devol extruder system and that described in WO

2008/011477 is that instead of converting solutions of brominated styrenic polymers and brominated anionic styrenic polymers into pellet or granular form, the combined BAPC solution in BCM formed in Example 13 was concentrated to a 60 wt% solution and used as the feed to the devol extruder. Other small differences in operating conditions of the devol extruder as compared to the operations described in WO 2008/011477 are referred to herein. Thus, in the present operation the rate of feed of the solution to the devol extruder was initially 15.88 to 18.14 kg/h (35 to 40 lbs/hr) and as the operation proceeded, this rate was gradually increased up to 28.58 kg/h (63 lbs/hr). At this point with the twin screws operating at 250 rpm, a torque of 23%, a melt temperature of 336°F (169°C), and a head pressure of 52.16 kg (115 lbs), collection of pellets or granules in the system was initiated. The zone temperatures in the devol extruder were as follows Zones 1 & 2 were at 107°C (225°F); Zones 3 & 4 were at 135°C (275°F); Zones 5 & 6 were at 163°C (325°F); Zones 7 & 8 were at 190°C (375°F); and Zones 9 & 10 were at 185°C (365°F). The die temperature was also at 185°C (365°F). After 50 minutes of operation the temperature of Zones 9 & 10 and the die were lowered to 177°C (350°F). The operation was completed after a few hours. Surprisingly, despite the fact that the BAPC had a much lower $M_w$ than that of typical brominated anionic styrenic polymer (ca. 3000 for BAPC, ca. 13,000 for typical brominated anionic styrenic polymer), pellets of good quality were formed in this operation. This surprising subject matter is more fully described in a commonly-owned copending U.S. Provisional Application, filed concurrently with the present application.

**EXAMPLE 15**

*Preparation of Pellets of this Invention using Pellets of Component (A) and General Purpose Crystal Polystyrene as Component (B)*

The apparatus used to form the pellets in this operation was a 30 mm co-rotating intermeshing laboratory twin-screw compounding extruder in an otherwise pelletizing system similar to that schematically depicted in Figs. 2 and 3 of WO 2008/011477. However, the pellets were formed by breakup of the solidified strands by a simple gravity drop of about 1.07 m (3.5 ft). This operation involved 5 runs of present interest. In these 5 runs, general purpose crystal polystyrene (Americas Styrenics XU) was fed along with pellets produced in Example 14. The 5 test samples of pellets were collected in jars for test and screened through a 20-mesh US Standard sieve screen in which therefore the openings were 0.84 mm (thirty-three thousandths of an inch).

Pellets formed in Example 15 were evaluated for their ability to withstand formation of fines and dust by a test method which will now be described with reference to Figs. 5A through 5D. For reference purposes the test is called the Tumbling Attrition Test. In essence, the test involves rotation of a hollow cylinder closed at each end containing a bottle or jar sized to freely slide from end to end within the closed space within the cylinder. The cylinder is positioned so that it can be rotated around its imaginary horizontal axis. Rotation of the cylinder on this axis causes the enclosed bottle or jar to slide to and fro within the cylinder whereby it alternatively impacts one or the other of the closed ends of the cylinder. This enables determination of the extent, if any, to which fine particles are formed by these impacts during a specified period of time. Thus, referring to Figs. 5A - 5D in which like parts have like numerals, a fillable bottle or jar 75 made of plastic and having a height of 12.7 cm (5 inches), an outer diameter of 5.08 cm (2 inches) and a capacity of 250 mL is filled with 200 grams of pellets to be evaluated. Typically this amount of pellets fills about one-half of the bottle or jar. The bottle or jar 75 is then tightly closed and placed inside a hollow cylinder 70 which has a length of 38.1 cm (15 inches) and an inner diameter of slightly greater than 5.08 cm (2 inches). The cylinder is then closed at end A and B thereby providing an enclosed space in which bottle or jar 75 can slide from end to end. Cylinder 70 is positioned so that it can be rotated in a vertical plane about axis 80 such as indicated by arrows 85. As shown by Fig. 5B, as the cylinder is rotated about axis 80 by more than 90 degrees, bottle or jar 75 commences to slide from closed end A toward closed end B of cylinder 70. As shown by Fig. 5C, upon reaching about 180 degrees of rotation, bottle or jar 75 has impacted the closed end B of cylinder 70. After passing 275 degrees of rotation, bottle or jar 75 begins sliding away from closed end B toward closed end A. As indicated in Fig. 5D, upon 360 degrees of rotation, bottle or jar 75 has impacted against closed end A of cylinder 70. Cylinder 70 is rotated at a constant rate of 15 rpm for 3 minutes. This causes the pellets within closed bottle or jar 75 to be agitated and subjected to an impact upon each 180 degrees of rotation. At the end of the 3 minute period, the rotation is stopped and the contents of the bottle or jar are sieved on a 20-mesh U.S. Standard sieve screen (0.84 mm (0.033") openings). The fines which passed through the screen and are collected, and are then analyzed for particle size distribution and the mass of such fines is determined. This in turn enables calculation of the weight percentage of total fines formed during the test from the starting quantity of the pellets. It can thus be seen that the operation of the test in this manner enables the determination of the extent to which the pellets have undergone attrition with formation of fines during the test.

**EXAMPLE 16**

*Evaluation of Pellets of this Invention as Regards Minimization of Fines and Dusts*

Five separate test quantities of pellets from each of the respective 5 batches of pellets formed in Example 15 were obtained. Each such test quantity was individually subjected to the Tumbling Attrition Test as described above. The results of these evaluations are summarized in Table 5. In Table 5 "PS" denotes general purpose crystal polystyrene.

**TABLE 5**

| Pellet Composition, wt% | Total Weight, g | Total Fines After Tumbling Attrition Test, g | Total Fines After Tumbling Attrition Test, wt% |
|---|---|---|---|
| 99% BAPC 1% PS | 200 | 3.87 | 1.9 |
| 98% BAPC 2% PS | 200 | 2.44 | 1.2 |
| 97% BAPC 3% PS | 200 | 1.43 | 0.7 |
| 96% BAPC 4% PS | 200 | 1.40 | 0.7 |
| 95% BAPC 5% PS | 200 | 1.01 | 0.5 |

Table 6 summarizes particle size distribution data obtained on the fines obtained after the tumbling tests referred to in Table 5.

**TABLE 6**

| Pellet Composition | Avg. Particle Size, μm (microns) | Microns | | | | | |
|---|---|---|---|---|---|---|---|
| | | 90% | 75% | 50% | 25% | 10% | Range |
| 99% BAPC 1% PS | 82 | 156 | 124 | 79 | 35 | 9 | 0.496-234.1 |
| 98% BAPC 2% PS | 139 | 255 | 211 | 138 | 63 | 18 | 0.375-373.1 |
| 97% BAPC 3% PS | 581 | 1223 | 850 | 492 | 217 | 94 | 0.258-2000 |
| 96% BAPC 4% PS | 759 | 1299 | 1044 | 766 | 446 | 204 | 0.496-2000 |
| 95% BAPC 5% PS | 709 | 1249 | 961 | 668 | 406 | 237 | 0.214-2000 |

**EXAMPLE 17**

*Bromination of APC to Form BAPC*

Three batches of APC from Example 12 were separately brominated in three bromination runs. These brominations were conducted in a 50-L glass reactor outfitted with a liquid jacket and temperature control with the Huber system, agitator, a reflux overhead condenser cooled to - 7°C, gas evolution port connected to a scrubber by means of two separate half inch O.D. Teflon® tubing lines, a BCM feed line from a holding tank, and a bromine feed line from a bromine storage tank.

In the first bromination run, the reactor was charged with 30 kg of BCM and 18 g of $AlBr_3$ then cooled to -3°C. The APC feed was prepared as a 13.9 kg solution of a 25 wt% solution in BCM. The APC used in the solution was a portion of the composite blend formed in Example 12. This solution was co-fed with 19.2 kg of 0.5 wt% $AlBr_3$ in bromine. The solutions were co-fed through Teflon® polymer tubing ending in close proximity (less than 50 mm) subsurface to the reaction mixture. The 25 wt% APC solution in BCM and the bromine solution were fed simultaneously (at mass-rates proportional to their respective mass) over a 180-min period, with care to ensure a continuous and constant-rate addition of both feeds so that the feeds finish together. Hydrogen bromide was formed and began to vigorously evolve after about 1 hr. A 22-L flask with a gas-scrubbing tower was charged with 13 kg of water and 1 kg of 50% NaOH. The scrubber was used to trap the formed HBr vented through the two Teflon® polymer lines from the outlets on the reflux condenser. At the end of the addition, the reaction mixture was allowed to warm to 7°C over a 30-minute period.

The workup of the bromination reaction was conducted in a 100-L glass jacketed reactor. It was charged with 20 kg of water, the water and quenched organic phase were kept cool (at about 5°C) by maintaining a jacket temperature of 1°C. The transfer was conducted by means of a vacuum differential. The quench vessel was placed under a vacuum

of 300 mmHg. The transfer of the bromination reaction mixture was conducted through a 0.95 cm (3/8") Teflon® polymer line leading from the bottom of the bromination reactor into the headspace of the quench reactor. The temperature in the quench reactor increases during the 30-40 min addition period to about 15°C. The bromination reactor and transfer line were rinsed with 8 kg of BCM, which was sent to the quench reactor where it mixed with the brominated APC solution. After agitating for 10 minutes, the mixture was allowed to settle for 5 minutes whereupon the phases separated readily.

The bottom phase contained BAPC product and free bromine. It was collected from the reactor into three 18.93 1 (5-gal) carboys each of which had been previously charged with 4 kg of 1% $NaBH_4$ in 10% aqueous NaOH. Because there was an extractable present in the carboys' material construction, contact time of the BCM solutions with the carboy was kept to a minimum. Negligible to no contamination of the product by the extractable was observed in the product solutions by NMR. As each carboy was filled, it was vigorously agitated by hand to decolorize the bromination reaction mixture by reduction of $Br_2$ and its active bromine derivatives with $NaBH_4$. The upper aqueous phase in the quench vessel was then collected and treated with sodium sulfite solution to reduce residual bromine before disposal or recovery for bromide value. The quench reactor was additionally washed with 4 kg of water, and sent for disposal. The contents of the three product solution/borohydride carboys were then returned to the reactor, and the aqueous portion was diluted with 12 kg of additional water to reduce the caustic concentration to prevent glass erosion. After checking for the presence of borohydride anion ($BH_4^{\theta}$), the reactor contents were heated to reflux for 30 minutes by setting the internal reaction temperature to 65°C though the temperature peaked at 62°C. These BAPC reactor contents were then cooled to 40°C and left to settle, then drained to carboys.

The second bromination run was performed in the same manner as the first bromination run except that (a) initially 18.5g of $AlBr_3$ was charged with the 30 kg of BCM into the reactor, (b) the APC feed was 13.8 kg with a $M_w$ =693 and a PD=1.26, (c) the weight of the 0.5 wt% $AlBr_3$ in bromine solution was 19.1 kg, and (d) the solutions were fed simultaneously over a 176-min period.

The third bromination run was performed in the same manner as the second bromination run except that (a) initially 45 g of $AlCl_3$ was charged with the 30 kg of BCM into the reactor, (b) no catalyst was mixed with the bromine, (c) the weight of the pure bromine used was 18.3 kg, and (d) the solutions were fed simultaneously over a 178-min period.

The three runs produced 169 kg of solution with 23 wt% BAPC were obtained each. These batches were combined in a 208.2 l (55-gallon) stainless steel drum for isolation. BCM was distilled overhead while the BAPC product was fed to the precipitation vessel subsurface, the product forming a fine water-slurry in the vessel. After cooling, the product BAPC was isolated by centrifugation, and dried in an oven under a purge of nitrogen for 36 hours at 105°C and then under vacuum at 105°C for 6 hours. The dry blended composite yielded 33 kg of BAPC in powder form. Table 7 summarizes properties of this BAPC powder. In Table 7, DBM denotes dibromomethane, PD denotes polydispersity, and YI denotes Yellowness Index.

**TABLE 7**

| *Characterization of the BAPC in Powder Form* | | | | |
|---|---|---|---|---|
| Residual BCM (ppm) | 0 | | $M_w$ | 2764 |
| Residual DBM (ppm) | 83 | | $M_n$ | 2046 |
| Bromine Content (% by nmr) | 73.9 | | $M_z$ | 4007 |
| Bromine Content (% by XRF) | 73.9 | | PD | 1.351 |
| Tg (°C) (DSC) | 121.52 | | Color (Solids) | |
| | | | L | 96.05 |
| | | | A | -0.42 |

(continued)

| Characterization of the BAPC in Powder Form | | | | |
|---|---|---|---|---|
| Thermogravimetric Analysis (TGA) | | | B | 2.24 |
| 1% Wt. Loss (°C) | 323.84 | | YI | 3.85 |
| 5% Wt. Loss (°C) | 357.39 | | Solution Color (10% in Chlorobenzene) | |
| 10% Wt. Loss (°C) | 369.08 | | L | 99.94 |
| 50% Wt. Loss (°C) | 402.65 | | A | -0.29 |
| | | | B | 1.18 |
| | | | ΔE | 1.31 |
| | | | Thermal Color at 250°C for 15 minutes | 10.42 |
| Thermal HBr at 300°C (ppm) | 217 | | Thermal Color at 300°C for 20 minutes | 22.03 |

**EXAMPLE 18**

*Preparation of Pellets of Thermoplastic Substrate Polymers Flame Retarded by Use of Pellets of this Invention*

In the operations of this Example, three batches of pellets were made from blends of BAPC and general-purpose crystal polystyrene (Americas Styrenics XU polystyrene). The BAPC used in forming these batches was composite BAPC powder from Example 17.

Preparation of Batch A Pellets - These pellets were produced from 89.9 parts of the powdery BAPC, 10.0 parts by weight of general-purpose crystal polystyrene (Americas Styrenics, XU), and 0.1 part by weight of a 50:50 (wt:wt) mixture of pentaerythritol tetrakis(3-(3,5-di-tert-butyl-4-hydroxyphenyl)propionate) (ETHANOX® 310 Antioxidant; Albemarle Corporation, and ETHAPHOS® 368 Antioxidant; Albemarle Corporation). The BAPC powder and the antioxidants were fed through a K-Tron KCLK20 powder feeder while the general-purpose-crystal polystyrene was fed through a K-Tron KCLQX3 pellet feeder. These feeders transferred the material to a Werner & Pfleiderer ZSK30 twin-screw extruder operated at 125 rpm. The feed rate was 9 kg/hr. The temperature profile of the extruder was 110-150-160-160-195°C. The extruder torque was at 44% and the power was at 0.3 kW. The material emerged from the extruder through a die containing multiple orifices and the extruded strands were cooled on a conveyor belt. The strands were then pelletized using a laboratory scale chopper.

Preparation of Batch B Pellets - This batch was produced from 94.9 parts of the BAPC powder, 5.0 parts by weight of general-purpose crystal polystyrene (Americas Styrenics, XU, received in the form of pellets), and 0.1 part by weight of a 50:50 (wt:wt) mixture of pentaerythritol tetrakis(3-(3,5-di-tert-butyl-4-hydroxyphenyl)propionate) (ETHANOX® 310 Antioxidant; Albemarle Corporation, and ETHAPHOS® 368 Antioxidant; Albemarle Corporation). The general-purpose crystal polystyrene was ground into a powder and then hand mixed with the other two components. The resultant mixture was fed through a K-Tron KCLK20 powder feeder and was transferred to a Werner & Pfleiderer ZSK30 twin-screw extruder operated at 100 rpm. The feed rate was 9 kg/hr and the temperature profile of the extruder was 110-150-160-165-200°C. The extruder torque was at 53% and the power was at 0.3 kW. The material emerged from the extruder through a die containing multiple orifices and the extruded strands were cooled on a conveying belt. The strands were then pelletized using a laboratory scale chopper.

Preparation of Batch C Pellets - The same procedure as in the preparation of Batch B pellets was used except that the pellets of Batch C were produced from 96.9 parts of BAPC powder, 3.0 parts by weight of general-purpose crystal polystyrene (Americas Styrenics, XU, received in the form of pellets), and 0.1 part by weight of a 50:50 (wt:wt) mixture of pentaerythritol tetrakis(3-(3,5-di-tert-butyl-4-hydroxyphenyl)propionate) (ETHANOX® 310 antioxidant; Albemarle Corporation, and ETHAPHOS® 368 antioxidant; Albemarle Corporation). The feed rate was 6 kg/hr and the temperature profile of the extruder was 110-150-160-160-190°C. The extruder torque was at 42% and the power was at 0.2 kW. The material emerged through the extruder through a die containing multiple orifices and the extruded strands were cooled on a conveyor belt. The strands were then pelletized using a laboratory scale chopper.

**EXAMPLE 19**

*Preparation and Properties of Pellets of This Invention when Blended with High Impact Polystyrene as the Substrate Polymer*

A group of polymeric flame retardant blends was prepared in which flame retardant amounts of pellets of this invention formed in Example 18 above were melt blended with high impact polystyrene (Dow 801 high impact polystyrene) and BrightSun® HB antimony trioxide to form test pieces. These test pieces were then subjected to various standard test procedures, including ASTM procedures. A listing of the test methods and of the test results as well as the makeup of the test compositions used in these tests are presented in Table 8 hereof.

**TABLE 8**

| **Composition of Formulations Tested, Wt%** | | | |
|---|---|---|---|
| Dow 801 HIPS | 80.6 | 81.4 | 81.9 |
| Example 19 Pellets - Batch A | 15.4 | | |
| Example 19 Pellets - Batch B | | 14.6 | |
| Example 19 Pellets - Batch C | | | 14.1 |
| $Sb_2O_3$ (Brightsun ATO) | 4.0 | 4.0 | 4.0 |
| **Properties, Units** | | | |
| Tensile Strength, Pa (psi) | 233.39 x $10^5$ (3385) | 234.49 x $10^5$ (3401) | 231.53 x$10^5$ (3358) |
| Tensile Modulus, Pa (psi) | 22497.88x$10^5$ (326304) | 21770.47x$10^5$ (315754) | 21030.73x$10^5$ (305025) |
| HDT @ 1820.22 Pa (264 psi), °C | 73.4 | 73.1 | 73.4 |
| Vicat, °C | 100.6 | 100.4 | 100.3 |
| Notched-Izod Impact, J/$cm^2$ (ft-lb/in) | 0.318 (1.51) | 0.319 (1.52) | 0.308 (1.47) |
| UL-94, 032 cm (1/8") | V-0 | V-0 | V-0 |
| $t_1$+$t_2$, sec. | 10 | 8 | 8 |
| MFR, 200°C/5 kg, g/10 min | 12.1 | 11.9 | 12.0 |
| Melt Stability @ 250°C | | | |
| Melt Viscosity @ -6.5 min, Pa-s | 117 | 116 | 117 |
| Melt Viscosity @ -13 min, Pa-s | 119 | 122 | 120 |
| Melt Viscosity @ -19.5 min, Pa-s | 122 | 123 | 123 |
| Melt Viscosity @ -29.9 min, Pa-s | 120 | 124 | 123 |
| Melt Viscosity @ -32.4 min, Pa-s | 118 | 121 | 121 |

*Analytical Methods*

Except for thermal color analysis, applicable analytical methods for assaying properties of APC's and BAPC's are set forth in International Publication Number WO 2008/154453 A1 having an International Publication Date of 18 December 2008. The procedure for thermal color analysis is as follows: A custom made metal heating block from J-Kem Scientific (St. Louis, MO) featuring 12 heating ports with diameters to snuggly fit 20 ml flat bottom scintillation vials is used. The heating block is placed in a in a nitrogen-purged glove box and heated to the test temperature (either 250 or 300 °C). Duplicate 5-gram samples of the BAPC powder are placed in 20 ml scintillation vials to be heat treated in the heating block. The material in the vials are heated for the specified time (15 minutes at 250 °C or 20 minutes at 300°C). Upon completion of the heat treatment or thermal aging period, the samples are immediately removed from the block and cooled under nitrogen. The samples are dissolved to make a 10 wt% solution in chlorobenzene. The solution color is of the dissolved sample in terms of L, a, b and Delta E is measured and compared to a chlorobenzene blank

standard (L=100, a=0, b=0) using a Hunter Lab ColorQuest XE Colorimeter (Reston, VA).

The invention may comprise, consist, or consist essentially of the materials and/or procedures recited herein.

Except as may be expressly otherwise indicated, the article "a" or "an" if and as used herein is not intended to limit, and should not be construed as limiting, a claim to a single element to which the article refers. Rather, the article "a" or "an" if and as used herein is intended to cover one or more such elements, unless the text expressly indicates otherwise.

Each and every patent or publication referred to in any portion of this specification is incorporated *in toto* into this disclosure by reference, as if fully set forth herein.

This invention is susceptible to considerable variation in its practice. Therefore the foregoing description is not intended to limit, and should not be construed as limiting, the invention to the particular exemplifications presented hereinabove.

## Claims

1. A process for pelletizing a brominated aromatic polymer composition of the formula:

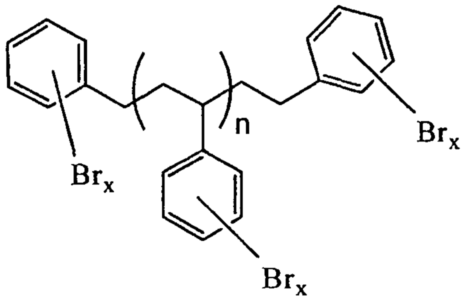

wherein n is an average number in the range of 2.9 to 3.9, wherein each x is the same or different and is a whole number in the range of 3 to 5, the average number of all of the x's in the composition being in the range of 3.50 to 3.80 and the weight percent of bromine as determined by X-Ray Fluorescence Spectroscopy in the polymer being in the range of 73.4 to 74.5, which process comprises
forming a flowing melt blend from components comprised of

(A) brominated aromatic polymer composition of the above formula and
(B) at least one thermoplastic polymer of at least one monoolefinic monomer
having in the range of 2 to 12 carbon atoms per molecule in proportions in which the Component (A):Component (B) weight ratio is in the range of 80:20 to 99.5:0.5; and

converting said flowing melt blend into solidified pellets,
wherein during the process of pelletization of the blend of said components comprised of (A) and (B), formation of particles in the dust size range of 20 to 840 μm is no more than 5 wt%.

2. A process as in Claim 1 wherein the conversion of components (A) and (B) into a flowing melt blend is conducted at an elevated temperature in an operating twin screw extruder, and wherein the extrudate from the extruder is pelletized before or after the extrudate solidifies or is solidified.

3. A process as in Claim 1 wherein the conversion of components (A) and (B) into a flowing melt blend is conducted at an elevated temperature in an operating devolatilization extruder, and wherein the extrudate from the devolatilization extruder is pelletized before or after the extrudate solidifies or is solidified.

4. A process as in Claim 3 wherein the conversion of components (A) and (B) into a flowing melt blend comprises converting in said devolatilization extruder a solution of components (A) and (B) into said flowing melt blend, the weight ratio of (A):(B) in said solution and in said melt blend being within said range of 88:12 to 98:2, and wherein the extrudate from the devolatilization extruder is pelletized before or after the extrudate solidifies or is solidified.

5. A pelletized flame retardant composition formed as in Claim 1, wherein the pellets comprise a blend of

(A) a brominated aromatic polymer composition of the formula:

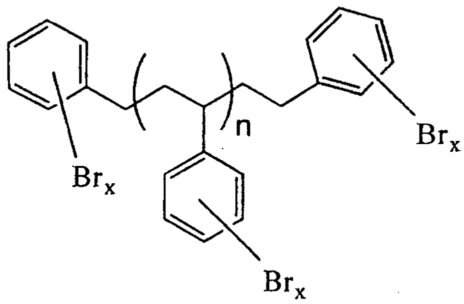

wherein n is an average number in the range of 2.9 to 3.9, wherein each x is the same or different and is a whole number in the range of 3 to 5, the average number of all of the x's in the composition being in the range of 3.50 to 3.80 and the weight percent of bromine as determined by X-Ray Fluorescence Spectroscopy in the polymer being in the range of 73.4 to 74.5; and

(B) at least one thermoplastic polymer of at least one monoolefinic monomer having in the range of 2 to 12 carbon atoms per molecule,

the proportions of (A) and (B) utilized in the blend being in an (A):(B) weight ratio in the range of 80:20 to 99.5:0.5, the pellets being **characterized in that**, if breakup occurs during handling or use, smaller granules are formed and formation of particles in the dust size range of 20 to 840 μm is no more than 5 wt%.

**6.** A composition as in Claim 5 in which the pellets further comprise at least one antioxidant.

**7.** A composition as in Claim 6 wherein said antioxidant is a combination of pentaerythritol tetrakis[3-(3,5-di-tert-butyl-4-hydroxyphenyl)propionate] and tris-(2,4-di-tert-butylphenyl)-phosphite.

**8.** The subject matter as in any of Claims 1-7 wherein said (B) thereof is selected from (i) at least one crystal styrenic polymer, (ii) at least one impact modified styrenic polymer, or (iii) both of (i) and (ii).

**9.** The subject matter as in Claim 8 wherein said (B) thereof is at least one high impact polystyrene.

**10.** The subject matter as in Claim 8 wherein said (B) thereof is at least one crystal polystyrene.

**11.** The subject matter as in any of Claims 1-7 wherein said (B) thereof is selected from (iv) at least one aliphatic α-olefinic hydrocarbon homopolymer or copolymer, (v) at least one copolymer of an α-olefinic hydrocarbon, and an α-olefinic monomer containing a functional group, or (vi) both of (iv) and (v).

**12.** The subject matter as in Claim 11 wherein said (B) thereof is a copolymer of ethylene and an aliphatic α-olefin hydrocarbon having 3 to 10 carbon atoms per molecule.

**13.** The subject matter as in Claim 11 wherein said (B) thereof is an-ethylene-octene copolymer.

**14.** The subject matter as in Claim 11 wherein said (B) thereof is an ethylene-vinylacetate copolymer.

**15.** Pellets formed as in Claim 1, composed of melt-blended components comprising:

(A) a brominated aromatic polymer composition of the formula:

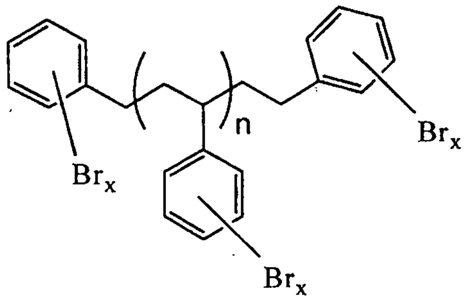

wherein n is an average number in the range of 2.9 to 3.9, wherein each x is the same or different and is a whole number in the range of 3 to 5, the average number of all of the x's in the composition being in the range of 3.50 to 3.80 and the weight percent of bromine as determined by X-Ray Fluorescence Spectroscopy in the polymer being in the range of 73.4 to 74.5; and

(B) at least one thermoplastic polymer of at least one monoolefinic monomer having in the range of 2 to 12 carbon atoms per molecule;

wherein said components (A) and (B) are in proportions such that the Component (A):Component (B) weight ratio is in the range of 80:20 to 99.5:0.5;

said pellets being further **characterized in that** when subjected to the Tumbling Attrition Test, the amount of particles capable of passing through a 841 μm (20-mesh U.S. Standard) sieve screen is 2 wt% or less.

**16.** Pellets as in Claim 15 wherein said amount of particles capable of passing through a 841 μm (20-mesh U.S. Standard) sieve screen is 1 wt% or less.

**Patentansprüche**

**1.** Verfahren zum Pelletieren einer bromierten, aromatischen Polymerzusammensetzung der Formel:

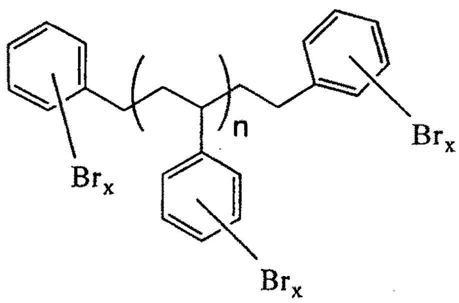

in der n eine durchschnittliche Zahl im Bereich von 2,9 bis 3,9 ist, jedes X gleich oder verschieden ist und eine ganze Zahl im Bereich von 3 bis 5 ist, wobei die durchschnittliche Zahl aller X in der Zusammensetzung im Bereich von 3,5 bis 3,8 liegt, und die Gewichtsprozent Brom, wie bestimmt durch Röntgenfluoreszenzspektroskopie, in dem Polymer im Bereich von 73,4 bis 74,5 liegen, wobei das Verfahren umfasst:

Bilden einer fließenden Schmelzmischung aus Komponenten, die

(A) Bromierte, aromatische Polymerzusammensetzung der obigen Formel und

(B) mindestens ein thermoplastisches Polymer aus mindestens einem monoolefinischen Monomer mit im Bereich von 2 bis 12 Kohlenstoffatomen pro Molekül

in Anteilen umfassen, in denen das Gewichtsverhältnis von Komponente (A) zu Komponente (B) im Bereich von 80 : 20 bis 99,5 : 0,5 liegt,

Umwandeln der fließenden Schmelzmischung in verfestigte Pellets,

wobei während des Vorgangs der Pelletierung der Mischung der Komponenten, die (A) und (B) umfassen, nicht mehr als 5 Gew.-% Teilchen im Staubgrößenbereich von 20 bis 840 μm gebildet werden.

2. Verfahren nach Anspruch 1, bei dem die Umwandlung der Komponente (A) und (B) in eine fließende Schmelzmischung bei einer erhöhten Temperatur in einem arbeitenden Doppelschraubenextruder durchgeführt wird und bei dem das Extrudat aus dem Extruder pelletiert wird, bevor oder nachdem das Extrudat sich verfestigt oder verfestigt wird.

3. Verfahren nach Anspruch 1, bei dem die Umwandlung der Komponenten (A) und (B) in eine fließende Schmelzmischung bei einer erhöhten Temperatur in einem arbeitenden Entgasungsextruder durchgeführt wird und bei dem das Extrudat aus dem Entgasungsextruder pelletiert wird, bevor oder nachdem das Extrudat sich verfestigt oder verfestigt wird.

4. Verfahren nach Anspruch 3, bei dem die Umwandlung der Komponenten (A) und (B) in eine fließende Schmelzmischung das Umwandeln einer Lösung der Komponenten (A) und (B) in die fließende Schmelzmischung in dem Entgasungsextruder umfasst, wobei das Gewichtsverhältnis von (A):(B) in der Lösung und in der Schmelzmischung im Bereich von 88:12 bis 98:2 liegt und bei dem das Extrudat aus dem Entgasungsextruder pelletiert wird, bevor oder nachdem das Extrudat sich verfestigt oder verfestigt wird.

5. Pelletierte Flammschutzzusammensetzung, die wie in Anspruch 1 gebildet worden ist, bei der die Pellets eine Mischung aus

(A) bromierter, aromatischer Polymerzusammensetzung der Formel

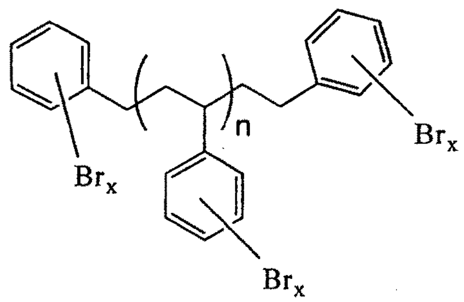

in der n eine durchschnittliche Zahl im Bereich von 2,9 bis 3,9 ist, jedes X gleich oder verschieden ist und eine ganze Zahl im Bereich von 3 bis 5 ist, wobei die durchschnittliche Zahl aller X in der Zusammensetzung im Bereich von 3,5 bis 3,8 liegt, und die Gewichtsprozent Brom, wie bestimmt durch Röntgenfluoreszenzspektroskopie, in dem Polymer im Bereich von 73,4 bis 74,5 liegen, und
(B) mindestens einem thermoplastischen Polymer aus mindestens einem monoolefinischen Monomer mit im Bereich von 2 bis 12 Kohlenstoffatomen pro Molekül,
umfassen, wobei die Anteile von (A) und (B), die in der Mischung verwendet werden, in einem Gewichtsverhältnis von (A):(B) im Bereich von 80:20 zu 99,5:0,5 liegen,
wobei die Pellets **dadurch gekennzeichnet sind, dass**, wenn während der Handhabung oder der Verwendung ein Aufbrechen erfolgt, kleinere Körner gebildet werden und nicht mehr als 5 Gew.-% Teilchen im Staubgrößenbereich von 20 bis 840 μm gebildet werden.

6. Zusammensetzung nach Anspruch 5, bei der die Pellets ferner mindestens ein Antioxidanz umfassen.

7. Zusammensetzung nach Anspruch 6, bei der das Antioxidanz eine Kombination aus Pentaerythrittetrakis[3-(3,5-ditert.butyl-4-hydroxyphenyl)propionat] und Tris-(2,4-ditert.butylphenyl)phosphite ist.

8. Gegenstand gemäß einem der Ansprüche 1 bis 7, bei dem das (B) davon ausgewählt ist aus (i) mindestens einem kristallinen, styrolischen Polymer, (ii) mindestens einem schlagfest-modifizierten, styrolischen Polymer, oder (iii) beidem von (i) und (ii).

9. Gegenstand nach Anspruch 8, bei dem das (B) davon mindestens ein hoch schlagfestes Polystyrol ist.

10. Gegenstand nach Anspruch 8, bei dem das (B) davon mindestens ein kristallines Polystyrol ist.

11. Gegenstand nach einem der Ansprüche 1 bis 7, bei dem das (B) davon ausgewählt ist aus (iv) mindestens einem

aliphatischen, α-olefinischen Kohlenwasserstoff-Homopolymer oder -Copolymer (v) mindestens einem Copolymer eines α-olefinischen Kohlenwasserstoffs und eines α-olefinischen Monomers, das eine funktionelle Gruppe enthält, oder (vi) beidem von (iv) und (v).

**12.** Gegenstand nach Anspruch 11, bei dem das (B) davon ein Copolymer von Ethylen und einem aliphatischen α-Olefin-Kohlenwasserstoff mit 3 bis 10 Kohlenstoffatomen pro Molekül ist.

**13.** Gegenstand nach Anspruch 11, bei dem das (B) davon ein Ethylen/Octen-Copolymer ist.

**14.** Gegenstand nach Anspruch 11, bei dem das (B) davon ein Ethylen/Vinylacetat-Copolymer ist.

**15.** Pellets, die wie in Anspruch 1 gebildet worden sind, zusammengesetzt aus schmelzgemischten Komponenten, die umfassen:

(A) bromierte, aromatische Polymerzusammensetzung der Formel

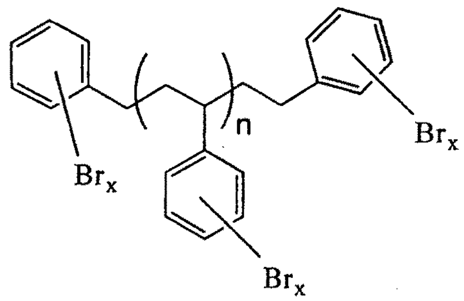

in der n eine durchschnittliche Zahl im Bereich von 2,9 bis 3,9 ist, jedes X gleich oder verschieden ist und eine ganze Zahl im Bereich von 3 bis 5 ist, wobei die durchschnittliche Zahl aller X in der Zusammensetzung im Bereich von 3,5 bis 3,8 liegt, und die Gewichtsprozent Brom, wie bestimmt durch Röntgenfluoreszenzspektroskopie, in dem Polymer im Bereich von 73,4 bis 74,5 liegen, und
(B) mindestens ein thermoplastisches Polymer aus mindestens einem monoolefinischen Monomer mit im Bereich von 2 bis 12 Kohlenstoffatomen pro Molekül,
wobei die Komponenten (A) und (B) in solchen Anteilen vorliegen, dass das Gewichtsverhältnis von Komponente (A) : Komponente (B) im Bereich von 80:20 bis 99,5:0,5 liegt,
wobei die Pellets ferner **dadurch gekennzeichnet sind, dass**, wenn sie dem Trommelabriebtest unterzogen werden, die Menge an Teilchen, die durch ein 841 µm-Sieb (20-Mesh U.S. Standard) passieren 2 Gew.-% oder weniger beträgt.

**16.** Pellets nach Anspruch 15, bei denen die Menge an Teilchen, die durch ein 841 µm Sieb (20-Mesh U.S. Standard) passieren 1 Gew.-% oder weniger beträgt.

**Revendications**

**1.** Procédé de pastillage d'une composition de polymères aromatiques bromés de formule :

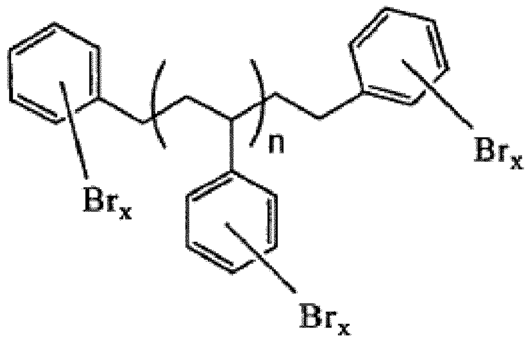

dans laquelle n est un nombre moyen situé dans la plage allant de 2,9 à 3,9, dans laquelle les x sont identiques ou différents et sont des nombres entiers situés dans la plage allant de 3 à 5, le nombre moyen de tous les x dans la composition étant situé dans la plage allant de 3,50 à 3,80 et le pourcentage en poids de brome, tel que déterminé par spectroscopie de fluorescence X, dans le polymère étant situé dans la plage allant de 73,4 à 74,5, ledit procédé comprenant :

la formation d'un mélange homogène fondu en écoulement à partir de composants composés

(A) d'une composition de polymères aromatiques bromés ayant la formule mentionnée ci-dessus et
(B) d'au moins un polymère thermoplastique d'au moins un monomère monooléfinique contenant 2 à 12 atomes de carbone par molécule

dans des proportions dans lesquelles le rapport pondéral composant (A)/composant (B) est situé dans la plage allant de 80/20 à 99,5/0,5 ; et
la conversion dudit mélange homogène fondu en écoulement en pastilles solidifiées,
dans lequel, lors du procédé de pastillage du mélange homogène desdits composants composés de (A) et de (B), la formation de particules dans la plage de tailles de poussière allant de 20 μm à 840 μm n'est pas supérieure à 5% en poids.

2. Procédé selon la revendication 1, dans lequel la conversion des composants (A) et (B) en mélange homogène fondu en écoulement est réalisée à une température élevée dans une machine d'extrusion à double vis en fonctionnement, et dans lequel l'extrudat provenant de la machine d'extrusion est pastillé avant ou après la solidification de l'extrudat.

3. Procédé selon la revendication 1, dans lequel la conversion des composants (A) et (B) en mélange homogène fondu en écoulement est réalisée à une température élevée dans une machine d'extrusion à dégazage en fonctionnement, et dans lequel l'extrudat provenant de la machine d'extrusion à dégazage est pastillé avant ou après la solidification de l'extrudat.

4. Procédé selon la revendication 3, dans lequel la conversion des composants (A) et (B) en mélange homogène fondu en écoulement comprend la conversion, dans ladite machine d'extrusion à dégazage, d'une solution des composants (A) et (B) en ledit mélange homogène fondu en écoulement, le rapport pondéral (A)/(B) dans ladite solution et dans ledit mélange homogène fondu étant situé dans la plage allant de 88/12 à 98/2, et dans lequel l'extrudat provenant de la machine d'extrusion à dégazage est pastillé avant ou après la solidification de l'extrudat.

5. Composition d'ignifuge sous forme de pastilles formée comme décrit dans la revendication 1, dans laquelle les pastilles comprennent un mélange

(A) d'une composition de polymères aromatiques bromés de formule :

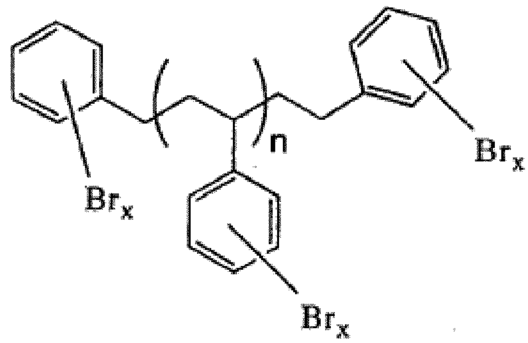

dans laquelle n est un nombre moyen situé dans la plage allant de 2,9 à 3,9, dans laquelle les x sont identiques ou différents et sont des nombres entiers situés dans la plage allant de 3 à 5, le nombre moyen de tous les x dans la composition étant situé dans la plage allant de 3,50 à 3,80 et le pourcentage en poids de brome, tel que déterminé par spectroscopie de fluorescence X, dans le polymère étant situé dans la plage allant de 73,4 à 74,5 ; et

(B) d'au moins un polymère thermoplastique d'au moins un monomère monooléfinique contenant 2 à 12 atomes de carbone par molécule,

les proportions de (A) et de (B) utilisées dans le mélange homogène étant dans un rapport pondéral (A)/(B) situé dans la plage allant de 80/20 à 99,5/0,5 ;

les pastilles étant **caractérisées en ce que**, si une rupture se produit lors de leur manipulation ou utilisation, des granulés plus petits se forment et la formation de particules dans la plage de tailles de poussière allant de 20 $\mu$m à 840 $\mu$m n'est pas supérieure à 5% en poids.

**6.** Composition selon la revendication 5, dans laquelle les pastilles comprennent en outre au moins un antioxydant.

**7.** Composition selon la revendication 6, dans laquelle ledit antioxydant est une combinaison de tétrakis[3-(3,5-di-tert-butyl-4-hydroxyphényl)-propionate] de pentaérythritol et de tris-(2,4-di-tert-butylphényl)-phosphite.

**8.** Sujet selon l'une quelconque des revendications 1 à 7, dans lequel ledit (B) de celui-ci est choisi parmi (i) au moins un polymère styrénique cristallin et (ii) au moins un polymère styrénique à résilience modifiée, ou (iii) est à la fois (i) et (ii).

**9.** Sujet selon la revendication 8, dans lequel ledit (B) de celui-ci est au moins un polystyrène à résilience élevée.

**10.** Sujet selon la revendication 8, dans lequel ledit (B) de celui-ci est au moins un polystyrène cristallin.

**11.** Sujet selon l'une quelconque des revendications 1 à 7, dans lequel ledit (B) de celui-ci est choisi parmi (iv) au moins un homopolymère ou copolymère d'hydrocarbure $\alpha$-oléfinique aliphatique et (v) au moins un copolymère d'un hydrocarbure $\alpha$-oléfinique et d'un monomère $\alpha$-oléfinique contenant un groupe fonctionnel, ou (vi) est à la fois (iv) et (v).

**12.** Sujet selon la revendication 11, dans lequel ledit (B) de celui-ci est un copolymère d'éthylène et d'un hydrocarbure $\alpha$-oléfinique aliphatique contenant 3 à 10 atomes de carbone par molécule.

**13.** Sujet selon la revendication 11, dans lequel ledit (B) de celui-ci est un copolymère d'éthylène-octène.

**14.** Sujet selon la revendication 11, dans lequel ledit (B) de celui-ci est un copolymère d'éthylène-acétate de vinyle.

**15.** Pastilles formées comme décrit dans la revendication 1, composées de composants mélangés à l'état fondu comprenant :

(A) une composition de polymères aromatiques bromés de formule :

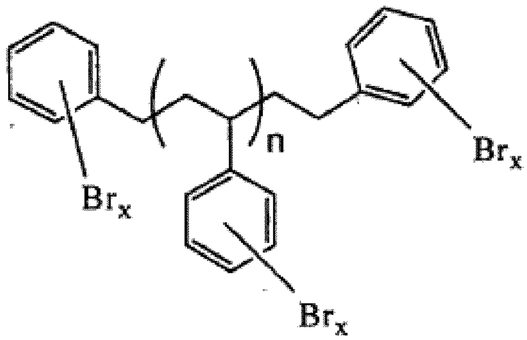

dans laquelle n est un nombre moyen situé dans la plage allant de 2,9 à 3,9, dans laquelle les x sont identiques ou différents et sont des nombres entiers situés dans la plage allant de 3 à 5, le nombre moyen de tous les x dans la composition étant situé dans la plage allant de 3,50 à 3,80 et le pourcentage en poids de brome, tel que déterminé par spectroscopie de fluorescence X, dans le polymère étant situé dans la plage allant de 73,4 à 74,5 ; et

(B) au moins un polymère thermoplastique d'au moins un monomère monooléfinique contenant 2 à 12 atomes de carbone par molécule ;

dans lesquelles lesdits composants (A) et (B) sont dans des proportions telles que le rapport pondéral composant (A)/composant (B) est situé dans la plage allant de 80/20 à 99,5/0,5 ;

lesdites pastilles étant **caractérisées en outre en ce que** quand elles sont soumises à un test d'attrition par culbutage, la quantité de particules capables de passer à travers un tamis de 841 μm (norme US de 20 mesh) est inférieure ou égale à 2% en poids.

**16.** Pastilles selon la revendication 15, dans lesquelles ladite quantité de particules capables de passer à travers un tamis de 841 μm (norme US de 20 mesh) est de 1% en poids.

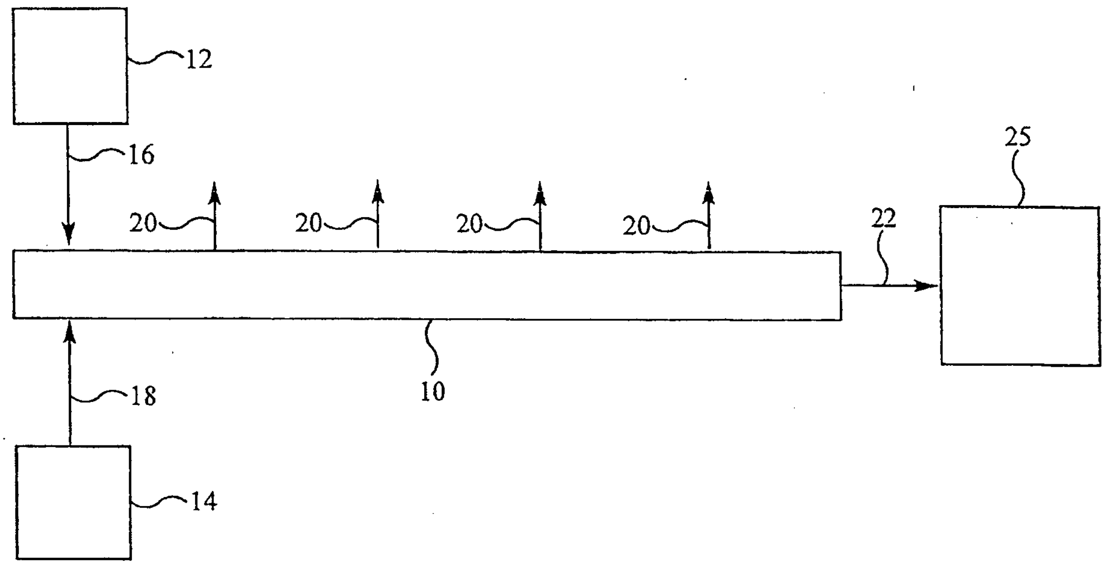


Fig. 1

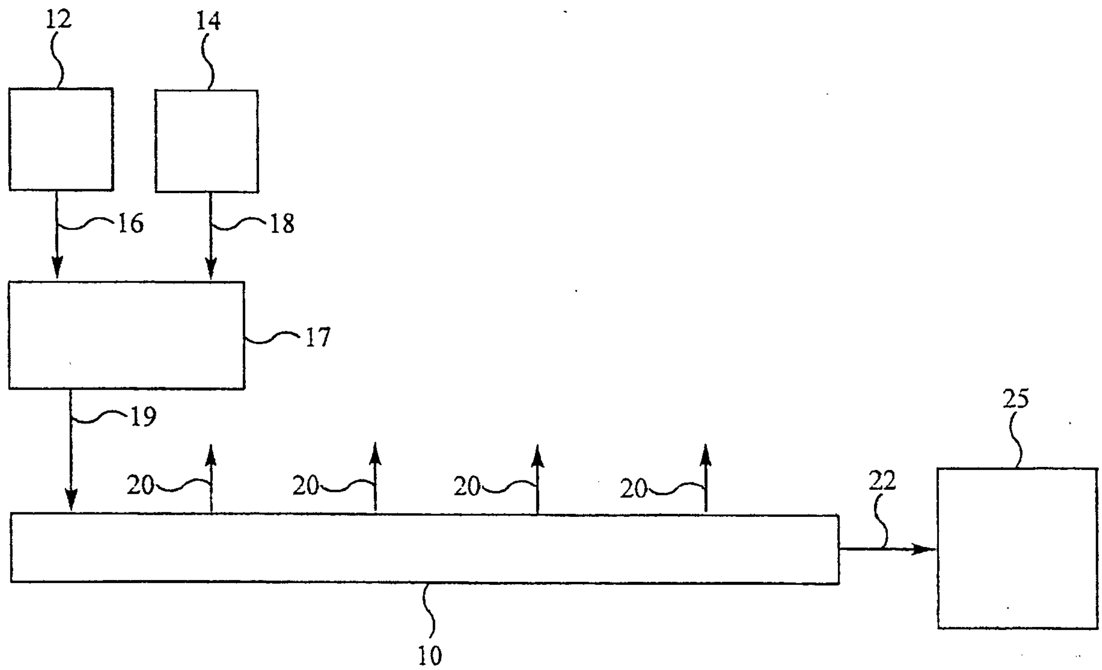


Fig. 2

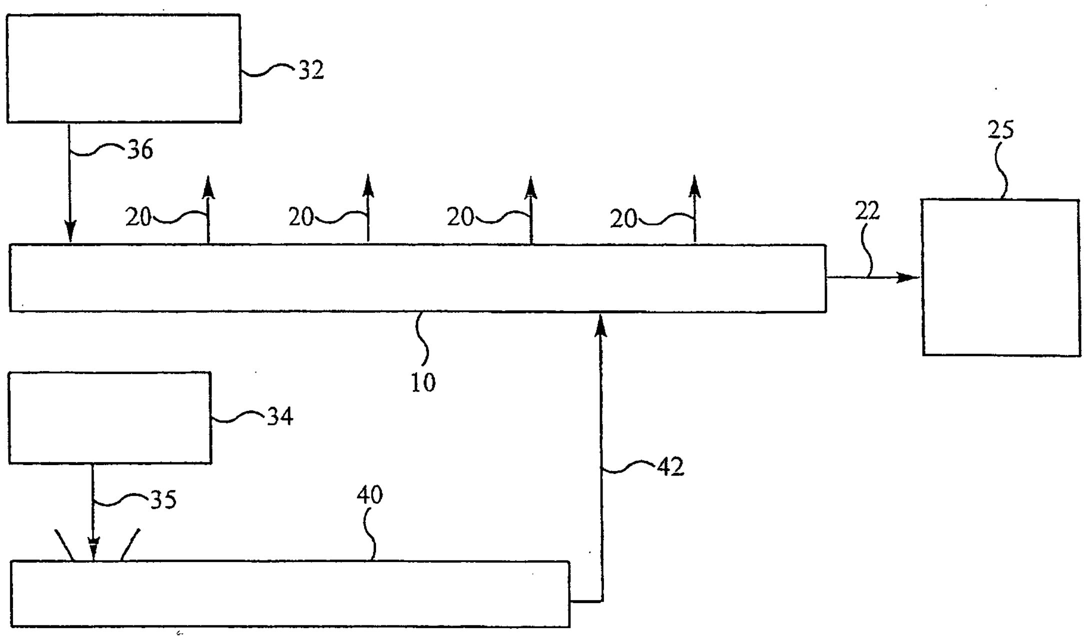


Fig. 3

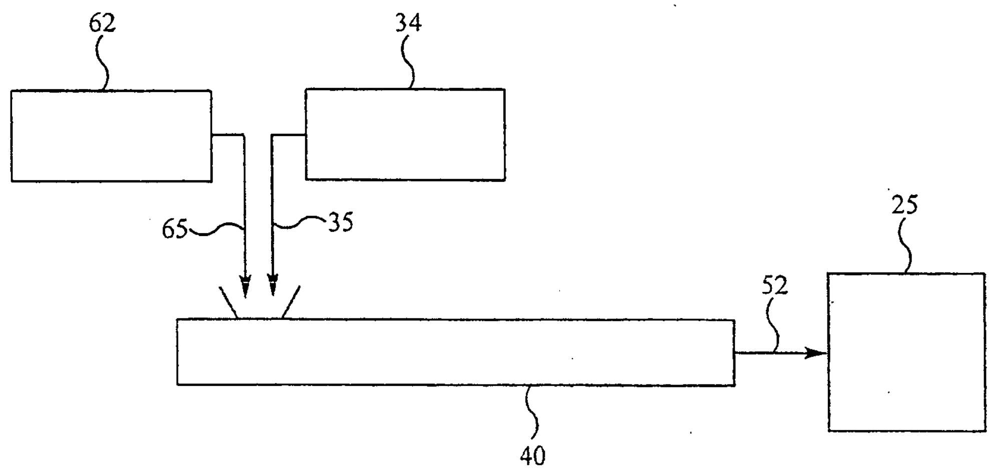


Fig. 4

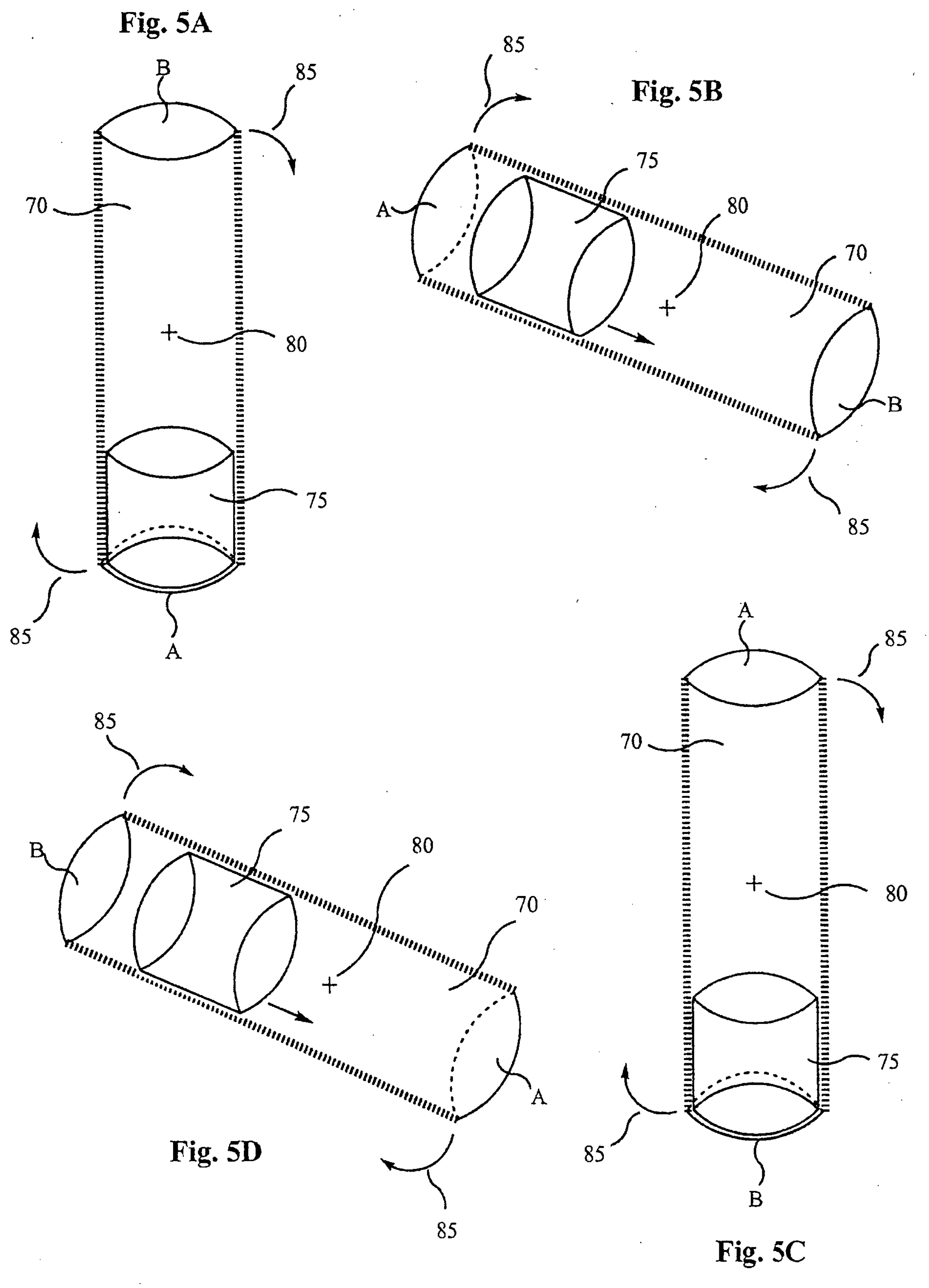
Fig. 5A
B
85
70
80
75
85
A
Fig. 5B
85
75
A
80
70
B
85
Fig. 5C
A
85
70
80
75
85
B
Fig. 5D
85
75
B
80
70
A
85

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61119289 A
- WO 2008011477 A
- WO 9955770 A1
- EP 0775719 A2
- EP 0002514 A1
- US 20070185280 A
- WO 2008154453 A1